# EUROPEAN PATENT SPECIFICATION

(11) **EP 2 267 824 B1**
(45) Date of publication and mention of the grant of the patent: **07.05.2014**
(21) Application number: 09733655.6
(22) Date of filing: 17.03.2009
(51) Int. Cl.: H01M 4/62, H01M 4/02, H01M 4/04, H01M 4/38, H01M 4/58, H01M 4/66, H01M 4/74, H01M 10/44, H01M 4/134, H01M 4/136, H01M 4/1395, H01M 10/052

(54) **NEGATIVE ELECTRODE FOR LITHIUM-ION SECONDARY BATTERY AND MANUFACTURING PROCESS FOR THE SAME**
NEGATIVE ELEKTRODE FÜR EINE LITHIUMIONEN-SEKUNDÄRBATTERIE UND HERSTELLUNGSVERFAHREN DAFÜR
ELECTRODE NÉGATIVE POUR BATTERIE RECHARGEABLE AU LITHIUM ET PROCÉDÉ DE PRODUCTION DE CELLE-CI

(30) Priority: 18.04.2008 JP 2008109184; 18.04.2008 JP 2008109197; 29.07.2008 JP 2008194996; 04.09.2008 JP 2008227443
(43) Date of publication of application: 29.12.2010
(73) Proprietor: KABUSHIKI KAISHA TOYOTA JIDOSHOKKI, Kariya-shi, Aichi 448-8671 (JP)
(72) Inventor: MIYOSHI, Manabu, Kariya-shi, Aichi, 448-8671 (JP); MURASE, Hitotoshi, Kariya-shi, Aichi, 448-8671 (JP); KOJIMA, Akira, Kariya-shi, Aichi, 448-8671 (JP); NIWA, Junichi, Kariya-shi, Aichi, 448-8671 (JP); HIROSE, Takayuki, Kariya-shi, Aichi, 448-8671 (JP); IZUMOTO, Kazuhiro, Osaka-shi, Osaka 538-0053 (JP); GODA, Hideki, Osaka-shi, Osaka 538-0053 (JP)
(74) Representative: TBK
(86) International application number: PCT/JP2009/055183
(87) International publication number: WO 2009/128319

(56) References cited:
- EP-A1- 2 178 140
- EP-A2- 1 246 280
- WO-A1-2007/044315
- WO-A1-2009/022513
- JP-A- 2000 200 608
- JP-A- 2001 283 922
- JP-A- 2002 289 196
- JP-A- 2003 171 180
- JP-A- 2005 166 530
- JP-A- 2005 174 653
- JP-A- 2005 235 734
- JP-A- 2005 310 759
- JP-A- 2006 059 558
- JP-A- 2006 196 338
- JP-A- 2007 095 421

## Description

### TECHNICAL FIELD

The present invention is one which relates to a negative electrode for lithium-ion secondary battery, and to a manufacturing process for the same.

### BACKGROUND ART

Since downsizing and weight saving of electronic devices have been advancing, secondary batteries whose energy density is high have been desired for their power source. A secondary battery is one that takes out chemical energy, which the positive-electrode active material and negative-electrode material possess, to the outside as electric energy by means of chemical reaction through electrolyte. In such secondary batteries, lithium-ion secondary batteries are secondary batteries, which possess a higher energy density, among those that have been put in practical use. Even among those, the spreading of organic-electrolyte-system lithium-ion secondary batteries (hereinafter being recited simply as "lithium-ion secondary batteries") has been progressing.

For lithium-ion secondary battery, lithium-containing metallic composite oxides, such as lithium-cobalt composite oxides, have been used mainly as an active material for the positive electrode. As for an active material for the negative electrode, carbonaceous materials, which have a multi-layered structure that enables the insertion of lithium ions between the layers (i.e., the formation of lithium intercalation complex) and the discharge of lithium ions out from between the layers, have been used mainly. The positive-electrode and negative-electrode polar plates are made in the following manner: these active materials, and a binder resin are dispersed in a solvent to make a slurry, respectively; then the resulting slurries are applied onto opposite faces of a metallic foil, namely, a collector for electricity (hereinafter being simply referred to as "collector"), respectively; and then the solvent is dry removed to formmixture-agent layers; and thereafter the resulting mixture-agent layers and collector are compression molded with a roller pressing machine.

In the other secondary batteries as well, although the types of respective active materials, collectors, and the like, differ, such secondary batteries have been available as those in which the active materials are bound or immobilized to the collector by means of a binder resin similarly.

As for the binder resin on this occasion, polyvinylidene fluoride (hereinafter being abbreviated to as "PVdf") has been used often for both of the electrodes. Since this binder resin is a fluorinated resin, the adhesiveness to collectors is poor, and accordingly it is probable that the falling down of active materials might occur.

Moreover, as the negative-electrode active material for lithium-ion secondary battery, the development of next-generation negative-electrode active materials, which possess a charge/discharge capacity that exceeds the theoretical capacity of carbonaceous material, has been advanced recently. For example, materials that include a metal, such as Si or Sn, which is capable of alloying with lithium, are regarded prospective. In the active material such as Si or Sn, and so forth, the volumetric change that is accompanied by the occlusion/release of Li at the time of charging/discharging is great. Accordingly, it is difficult to maintain the bonded state to collector satisfactorily even when the aforementioned fluorinated resin is used for the binder. Moreover, secondary batteries using the aforementioned active materials are associated with such a drawback that the cyclic degradation is great considerably, because the active materials are expanded and contracted repeatedly due to charging/discharging cycles so that their active-material particles have been pulverized finely or have come to be detached.

Consequently, various combinations of binder resins and active materials have been investigated in order to upgrade cyclic characteristics.

In Patent Literature No. 1, a negative electrode for nonaqueous electrolyte secondary battery is proposed, negative electrode which includes: a negative-electrode active material that comprises a first phase including Si, and a second phase including a silicide of transition metal; a binder that comprises polyimde and polyacrylic acid; and a conducive material being a carbonaceous material.

Moreover, in Patent Literature No. 2, a negative electrode for lithium-ion secondary battery is disclosed, negative electrode which is formed on a surface of negative-electrode collector by heat treating a negative-electrode mixture-agent layer that includes: negative-electrode active-material particles including silicon and/or an alloy of silicon; and a binder; wherein an imide compound, which is decomposed by means of heat treating a binder precursor comprising polyimide or polyamic acid, is included as the binder. In the examples, however, no negative-electrode active-material particles that include a silicon alloy are disclosed.

In addition, as a method of making use of such a secondary battery, it has been the basic way of using in which it is used up in a wider range of the charge/discharge capacity from full charging and up to another full charging, and so it has been regarded as an issue how to make it usable for a longer period of time by fully charging it once. It has been investigated as well to control this method of making use of it in order to suppress the cyclic degradation as aforementioned.

For example, in Patent Literature No. 3, a method of making use of lithium secondary battery is proposed, the method being a method of making use of a lithium secondary battery in which an electrode is used as the negative electrode, the electrode being made by disposing an active-material layer including silicon on a collector, wherein the lithium secondary battery is charged/discharged in such a range that an electric potential of the negative electrode is 0.8 V vs. Li/Li⁺ or less other than at the time of first-time charging. In Patent Literature No. 3, no binders are made use of. In Patent Literature No. 3, such a statement is made therein that it is possible to upgrade the cyclic performance by means of setting a discharging terminal electric potential to 0.8 V or less, because the degree of change in the active material becomes greater in the final stage of discharging so that degradation in the active material is facilitated.

Moreover, many of the lithium-ion secondary batteries as aforementioned are those which are made as follows: a film-shaped electrode with a thickness of 200-300 µm is wound or rolled up together with a separator, or is laminated thereon, film-shaped electrode which has been made by applying or pressure bonding a mixture material including an active material onto a collector being made of a porous metallic plate or metallic foil; and then the resultant wound or laminated film-shaped electrode is further encapsulated in a cylindrical or rectangular armoring can.

In this instance, it has been necessary to use aluminum, which is stable even at high voltages, for the collector of positive electrode for lithium-ion secondary battery, because high voltages are applied thereto in the final stage of charging the lithium-ion secondary battery. Aluminum has corrosion resistance against electric potentials of 4.5 V or more with respect to the electric potential of lithium, because its surface is covered with a thin oxidized membrane.

As various electronic devices have been downsized recently, secondary batteries with much higher energy density have been longed for. In order to make such a secondary battery with higher energy density, a variety of investigations have been carried out regarding the collector of the positive electrode. As being indicated in Patent Literature No. 4 mentioned below, foamed aluminum, which serves as a three-dimensionally-structured metallic porous body that is provided with a plurality of vacancies, has been investigated as the collector for positive electrode. In Patent Literature No. 5, a positive-electrode collector, which is made of honeycomb-shaped aluminum, has been investigated as the collector for positive electrode. In Patent Literature No. 6, a porous sheet, which is made of aluminum fibers, has been investigated as the collector for positive electrode.
Patent Literature No. 1: Japanese Unexamined Patent Publication (KOKAI) Gazette No. 2007-95,670;
Patent Literature No. 2: Japanese Unexamined Patent Publication (KOKAI) Gazette No. 2007-242,405;
Patent Literature No. 3: Japanese Unexamined Patent Publication (KOKAI) Gazette No. 2005-93,084;
Patent Literature No. 4: Japanese Unexamined Patent Publication (KOKAI) Gazette No. 2005-285,447;
Patent Literature No. 5: Japanese Unexamined Patent Publication (KOKAI) Gazette No. 2008-10,316; and
Patent Literature No. 6: Japanese Unexamined Patent Publication (KOKAI) Gazette No. 6-196,170

WO2009022513 (A1) (Art. 54(3) EPC) relates to an electrode for secondary batteries having, wherein separation or fall-off of an active material from a collector is suppressed, which is produced through a coating step wherein a binder resin and an active material are coated over the surface of a collector. This electrode for secondary batteries is characterized in that the binder resin is composed of an alkoxysilyl group-containing resin having a structure represented by the following formula (I). 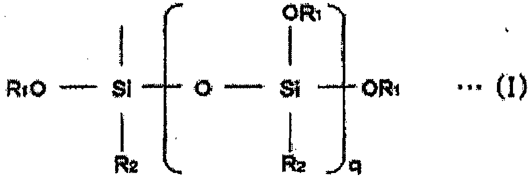
R1 represents an alkyl group having 1-8 carbon atoms; R2 represents an alkyl group having 1-8 carbon atoms or an alkoxyl group; and q represents an integer of 1-100.

WO2007044315 (A1) describes that the degree to which the silicon is lithiated during cycling can be controlled, thereby lowering the volume expansion while maintaining an acceptable volumetric capacity, and reducing the failure rate of the silicon containing anodes in lithium ion batteries. The crystalline silicon anode is first charged so that the anode becomes partially lithiated. The voltage of the anode during this charging step is typically less than the lithiation potential of crystalline silicon at ambient temperatures, for example, less than 17OmV versus lithium metal. The total number of charge-discharge cycles during conditioning is at least two or more.

### DISCLOSURE OF THE INVENTION

### Assignment to be Solved by the Invention

Asset forth in Japanese Patent Literature No. 1 and Japanese Patent Literature No. 2, the combinations of active materials and binder resins that bind them together have been investigated variously; however, since there is still much room for upgrading the performance, a next-generation active material, and also a binder resin with upgraded performance for binding it together have been sought for.

Moreover, the processing temperature for PVdF, which has been used conventionally as the binder resin, is 140 °C approximately. Accordingly, from the viewpoint of connection with facilities that have been used heretofore, it is required to improve the performance so as not to make the processing temperature a higher temperature as much as possible. In Patent Literature No. 1, the processing temperature is 400 °C, whereas the processing temperature is 200 °C -300 °C in Patent Literature No. 2.

Moreover, although the using method that limits the service range is also investigated in Patent Literature No. 3, this is a using method for the case where no binder resin is used; no optimum using method is proposed for the case of making use of binder resin whose performance is upgraded.

In addition, as Patent Literature Nos. 4-6 indicate, collectors have been investigated in order to make a secondary battery with higher energy density; however, no collector has been obtained yet, collector which has flexibility that makes it windable or rollable.

The present invention is one which has been done in view of such circumstances, and it is a first object to provide a negative electrode for lithium-ion secondary battery, negative electrode in which the active material is suppressed from coming off or falling down from the collector, and which has excellent cyclic performance.

### Means for Solving the Assignment

### (First Means)

As a result of earnest studies being made by the present inventors, they found out that it is possible to provide a negative electrode for secondary battery, negative electrode in which the active material is suppressed from coming off or falling down from the collector and which has good cyclic performance, by means of utilizing a specific resin that has not been utilized so far as a binder resin for secondary-battery electrode, that is, an alkoxysilyl group-containing resin, the structure of the alkoxysilyl group being specified by formula (I), as a binder resin for electrode.

(Chemical Formula 1) 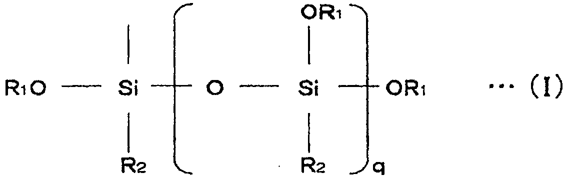
wherein "R₁" is an alkyl group whose number of carbon atoms is from 1 to 8;
"R₂" is an alkyl group or alkoxyl group whose number of carbon atoms is from 1 to 8; and
"q" is an integer of from 1 to 100

Moreover, in that instance, they found out that the cyclic performance gets better furthermore by means of a setting that the active material includes a lithium-inactive metal, which does not form any intermetallic compounds with lithium, or a silicide of the lithium-inactive metal, and an elemental substance of Si. Since the aforementioned lithium-inactive metal or silicide of the lithium-inactive metal does not form any intermetallic compounds with lithium, sections that it occupies in the active material do not undergo any volumetric fluctuations at the time of charging and discharging. Consequently, it is believed that stresses when the elemental substance of Si expands are relieved with respect to the active material as a whole so that the volumetric change in the elemental substance of Si that is accompanied by the occlusion/release of lithium is inhibited from resulting in the drawback that the active material comes off or falls down from the collector.

Specifically, a negative electrode for lithium-ion secondary battery according to a first means of the present invention is characterized in that, in a negative electrode for lithium-ion secondary battery, the negative electrode being manufactured via an application step of applying a binder resin and an active material onto a surface of collector,
the binder resin is an alkoxysilyl group-containing resin, the structure of the alkoxysilyl group being specified by formula (I) ; and
the active material includes a lithium-inactive metal that does not form any intermetallic compounds with lithium, or a silicide of the lithium-inactive metal, and an elemental substance of Si.

An alkoxysilyl group-containing resin, the structure of the alkoxysilyl group being specified by formula (I) is a hybrid composite of resin and silica. The thermal stability becomes higher than that of a simple substance of the resin by means of the setting that it turns into the hybrid composite of resin and silica.

Moreover, the structure that is specified by formula (I) is a structure that is made of parts having undergone sol-gel reaction, and accordingly indicates that unreacted parts that undergo a sol-gel reaction remain. Consequently, the sol-gel reaction also occurs simultaneously when the binder resin cures, and thereby not only the parts having undergone sol-gel reaction react with each other but also react with the resin' s OH groups. Moreover, they are believed to react with the collector's surface as well. Therefore, it is possible to retain the collector and the active material firmly to each other.

Moreover, since the active material includes a lithium-inactive metal, which does not form any intermetallic compounds with lithium, or a silicide of the lithium-inactive metal, and an elemental substance of Si, stresses at the time of expansion are relieved even when the active material undergoes volumetric expansion at the time of charging due to the occlusion of lithium into the elemental substance of Si, and thereby the active material is inhibited from cracking, or from coming off from the collector.

It is preferable that the lithium-inactive metal can be at least one member that is selected from the group consisting of Ti, Zr, Ni, Cu, Fe and Mo. The aforementioned lithium-inactive metal, or the aforementioned silicide of the lithium-inactive metal, has high electron conductivity, and the strength is high compared with that of the elemental substance of Si. Consequently, stresses at the time of expansion are likely to be relieved; moreover, it is possible to inhibit the come-off active material from resulting in lowering the conductivity. In particular, from the perspective that its hardness is higher, the lithium-inactive metal, or the silicide of the lithium-inactive metal, can preferably be Mo, or MoSi₂.

A manufacturing process for the negative electrode for lithium-ion secondary battery according to the first means of the present invention is characterized in that it is a manufacturing process comprising:
an application step of applying a binder resin and an active material onto a surface of collector; and
a curing step of curing the binder resin and then binding the active material on the collector surface,
the binder resin is an alkoxysilyl group-containing resin,
the structure of the alkoxysilyl group being specified by formula (I) ; and
the active material includes a lithium-inactive metal that does not form any intermetallic compounds with lithium, or a silicide of the lithium-inactive metal, and an elemental substance of Si.

By means of setting such a manufacturing process as such, it is possible to manufacture negative electrodes for lithium-ion secondary battery in which the active material is less likely to come of from the collector surface.

### Effect of the Invention

By means of completing the negative electrode for lithium-ion secondary battery according to the present invention and using the manufacturing process for the same, it is possible for the negative electrode to exhibit better cyclic performance.

### BRIEF DESCRIPTION OF THE DRAWINGS

Fig. 1 illustrates a partial schematic explanatory diagram of an electrode for lithium-ion secondary battery;
Fig. 2 illustrates a graph for comparing cyclic characteristics regarding batteries, in which negative electrodes according to Testing Example Nos. 1 through 5 were used, with each other;
Fig. 3 illustrates a graph for comparing cyclic characteristics regarding batteries, in which negative electrodes according to Testing Example Nos. 6 through 8 were used, with each other;
Fig. 4 illustrates a partial schematic explanatory diagram of another electrode for lithium-ion secondary battery;
Fig. 5 illustrates a graph for comparing cyclic characteristics regarding batteries, in which negative electrodes according to Electrode Nos. 9 through 12 were used, with each other;
Fig. 6 illustrates a graph for showing cyclic characteristics regarding batteries, in which negative electrodes according to Electrode No. 10 and Electrode No. 11 were used, when the charge capacities were limited;
Fig. 7 illustrates a graph for showing relationships between theoretical capacity and volumetric expansion;
Fig. 8 illustrates a graph for comparing a number of cycles, at which 95% of controlled charge capacity could be maintained, with a "controlled capacity/theoretical capacity" ratio;
Fig. 9 illustrates a graph for comparing results of a charge/discharge cyclic test on a model battery, in which a positive electrode according Testing Example No. 14 was used, with those of the charge/discharge cyclic test on another model battery, in which a positive electrode according Testing Example No. 17 was used;
Fig. 10 illustrates a graph for comparing results of a rating test on a model battery, in which a positive electrode according Testing Example No. 15 was used, with those of the rating test on another model battery, in which a positive electrode according Testing Example No. 18 was used; and
Fig. 11 illustrates a graph for comparing results of a rating test on a model battery, in which a positive electrode according Testing Example No. 16 was used, with those of the charge/discharge cyclic test on another model battery, in which a positive electrode according Testing Example No. 19 was used.

### MODES FOR CARRYING OUT THE INVENTION

### (First Embodiment)

A negative electrode for lithium-ion secondary battery according to the present invention is one which is manufactured via an application step of applying a binder resin and an active material onto a surface of collector. The "applying" means to put a binder resin, and an active material onto a collector. As for an application method, it is possible to use the following application methods that have been used generally whenmaking electrodes for secondary battery: roll coating methods; dip coating methods; doctor blade methods; spray coating methods; and curtain coating methods, and the like.

The "collector" refers to a chemically-inactive highly-electron-conductive body for keeping electric current flowing to electrodes during discharging or charging. The collector is formed as a configuration, such as a foil or plate that is formed of a highly-electron-conductive body. The configuration is not limited to above especially as far as it is a configuration that fits for the objective. As for the collector, it is possible to name copper foils, aluminum foils, and the like, for instance.

The "active material" refers to a substance that contributes directly to electrode reactions, such as charging reactions and discharging reactions. Although the substance that makes the active material differs depending on the types of secondary battery, it is not limited especially as far as being one into which substances that fit for the objective of that secondary battery are inserted and from which those substances are released reversibly by means of charging/discharging.

The active material that is used in the present invention has a powdery configuration, and is applied and then bound on the collector's surface via the binder resin. Although the powder differs depending on batteries that are aimed for, it is preferable that the particle diameter can be 100 µm or less.

In the case of lithium-ion secondary battery, lithium-containing metallic composite oxides, such as lithium-cobalt composite oxides, lithium-nickel composite oxides and lithium-manganese composite oxides, can be used as for an active material for the positive electrode. For an active material for the negative electrode, the following can be used: carbonaceous materials that are capable of occluding and releasing lithium; and metals, which are capable of turning lithium into alloy, or oxides of these, and the like.

In the case of the First Embodiment according to the present invention, an elemental substance of Si is included as an active material. A theoretical capacity of carbon, a carbonaceous material, is 372 mAhg⁻¹, whereas a theoretical capacity of Si, a metal that is capable of alloying with lithium, is 4,200 mAhg⁻¹. However, Si undergoes considerably great volumetric change that is accompanied by the insertion and elimination of lithium, compared with those of the carbonaceous materials. Moreover, in the present invention, in addition to an elemental substance of Si, a lithium-inactive metal that does not form any intermetallic compounds with lithium, or a silicide of the lithium-inactive metal, is further included in the active material. The lithium-inactive metal, or the silicide of the lithium-inactive metal, does not contribute to charging/discharging. Consequently, stress, which occurs at the time of expansion of the elemental substance of Si that occludes lithium, is relived in the active material as a whole, and so the active material is inhibited from cracking or coming off from the collector.

As for the lithium-inactive metal, at least one member that is selected from the group consisting of Ti, Zr, Ni, Cu, Fe and Mo is preferable, and Mo is especiallypreferable. Bymeans of including one of the aforementioned lithium-inactive metals, or one of their silicides, in the active material, in addition to Si whose electron conductivity is low, it is possible to upgrade the electron conductivity furthermore in conjunction with the aforementioned advantageous effect. In the charging/discharging reaction of active-material raw material, the giving and receiving of electrons between active material and collector is necessary and indispensable simultaneously with the giving and receiving of lithium ions therebetween. Consequently, it is possible to suppress the degradation of cyclic characteristic by means of upgrading the electron conductivity of active material.

A composite powder of an elemental substance of Si with a lithium-inactive metalthat does not form any intermetallic compounds with lithium, or a silicide of the lithium-inactive metal, can be produced by means of mechanical alloying method. In this method, it is feasible to form fine primary particles whose particle diameters are from 10 to 200 nm approximately with ease.

As for a specific method, it is possible to obtain a composite powder, namely, an active material that is aimed at, by means of setting the primary particle diameter to from 10 to 200 nm approximately by the following: mixing a raw-material substance comprising a plurality of components; and then carrying out a mechanical alloying treatment. It is possible to make a mixture of an elemental substance of Si and a silicide of the lithium-inactive metal from the elemental substance of Si and lithium-inactive metal alone that serve as raw materials. That is, it is possible to make a silicide of lithium-inactive metal from Si and the lithium-inactive metal, which serve as raw materials, by means of a mechanical alloying treatment. It is preferable that a centrifugal acceleration (or input energy) in the mechanical alloying treatment can be from 5 to 20 G approximately, and it is more preferable that it can be from 7 to 15 G approximately.

It is allowable to apply conventionally-known methods as they are to the mechanical alloying treatment per se. For example, it is possible to obtain a composite powder, namely, an active material that is aimed at, by means of compositing a raw-material mixture (or alloying it partially) by repeating mixing and adhering by means of mechanical joining force. As for an apparatus to be made use of for the mechanical alloying treatment, it is possible to make use of the following as they are: mixingmachines, dispersing machines, pulverizing machines, and the like, which have been made use of generally in the field of powder.

To be concrete, the following can be exemplified: kneading machines, ball mills, vibration mills, agitator mills, and so forth. In particular, it is desirable to use a mixing machine that can give shearing force to the raw-material mixture, because it is necessary to efficiently disperse particles, which have been overlapped or agglomerated during the compositing operation, one particle by one particle in order to make the overlapping powder, whose major component is made of a battery active material that exists between networks, less. Operational conditions for these apparatuses are not those which are limited in particular.

Moreover, it is also possible to make a composite powder by means of mixing an elemental substance of Si and a lithium-inactive metal, or a silicide of the lithium-inactive metal, each of which has been produced individually by the aforementioned method.

Moreover, as for a mixing proportion between an elemental substance of Si and a lithium-inactive metal, or a silicide of the lithium-inactive metal, it is preferable that a molar ratio of an elemental substance of Si, and a molar ratio of a lithium-inactive metal, or a silicide of the lithium-inactive metal, can make a ratio of from 1:1 to 3:1. Moreover, it is preferable that the mass of a lithium-inactive metal, or that of a silicide of the lithium-inactive metal, can be included in an amount of 40 wt. % per 100 wt. % of the negative-electrode active material. Note that "wt. %" means "% by mass."

It is also possible to bind a conductive additive onto a surface of the collector together with the active material. As for the conductive additive, it is allowable to add the following, namely, carbonaceous fine particles: carbon black, graphite, acetylene black, KETJENBLACK, carbon fibers, and the like, independently; or to combine two or more species of them to add.

The binder resin is used as a binding agent when applying these active material and conductive additive to the collector. It is required for the binding resin to bind the active material and conductive additive together in an amount as less as possible, and it is desirable that that amount can be from 0.5 wt. % to 50 wt. % of a summed total of the active material, the conductive additive, and the binder resin.

The binder resin according to the First Embodiment of the present invention is an alkoxysilyl group-containing resin, the structure of the alkoxysilyl group being specified by formula (I). The structure that is specified by formula (I) includes a structure that is made of parts having undergone sol-gel reaction, and the alkoxysilyl group-containing resin makes a hybrid composite of resin and silica.

The "structure that is made of parts having undergone sol-gel reaction" is a structure that contributes to reactions in carrying out sol-gel process. The "sol-gel process" is process in which a solution of inorganic or organic metallic salt is adapted into a starting solution; and the resultant solution is turned into a colloid solution (Sol) by means of hydrolysis and condensationpolymerization reactions; and then a solid (Gel) that has lost flowability is formed by facilitating the reactions furthermore. Generally speaking, metallic alkoxides (i.e., compounds that are expressed by M(OR)ₓ where "M" is a metal and "R" is an alkyl group) are adapted into a raw material in the sol-gel process.

The compounds that are expressed by M(OR)ₓ react like following equation (A) by means of hydrolysis.

nM(OR₎x + nH₂O ---> nM(OH)(OR)ₓ₋₁ + nROH ··· (A)

The compounds turn into M(OH)ₓ eventually when the reaction being shown herein is facilitated furthermore, and then react like following equation (B) when a condensation polymerization reaction occurs between two molecules being generated herein, that is, between two hydroxides.

M(OH)ₓ + M(OH)ₓ ---> (OH)ₓ₋₁M-O-M(OH)ₓ₋₁, + H₂O (B)

On this occasion, it is feasible for all the OH groups to undergo polycondensation; and moreover it is feasible for them to undergo dehydration/condensation polymerization reaction with organic polymers that possess an OH group at the terminal ends.

The binder resin can react not only between parts having undergone sol-gel reaction but also with the resin's OH groups at the time of curing binder resin, because of having a structure, which is made of parts that have undergone sol-gel reaction, as indicated by formula (I). Moreover, the aforementioned binder resin exhibits good adhesiveness to the collector, active material and conductive additive, namely, inorganic components, because of being a hybrid composite of resin and silica, and consequently it is possible to retain the active material and conductive additive on the collector firmly.

On this occasion, as for the resin thatmakes a hybrid composite with silica, the following can be given: bisphenol type-A epoxy resins, novolac-type epoxy resins, acrylic resins, phenolic resins, polyamic acid resins, soluble polyimide resins, polyurethane resins, or polyamide-imide resins. It is possible to adapt these resins and silica into hybrid composites, which have a structure of the alkoxysilyl group that is specified by formula (I), by means of sol-gel process, thereby turning into the following, respectively: alkoxy group-containing silane-modified bisphenol type-A epoxy resins, alkoxy group-containing silane-modified novolac-type epoxy resins, alkoxy group-containing silane-modified acrylic resins, alkoxy group-containing silane-modified phenolic resins, alkoxy group-containing silane-modified polyamic acid resins, alkoxy group-containing silane-modified soluble polyimide resins, alkoxy group-containing silane-modified polyurethane resins, or alkoxy group-containing silane-modified polyamide-imide resins.

In this instance,the binder resin has a structure of the alkoxysilyl group that is specified by formula (I), and this indicates such a state that parts that have undergone sol-gel reaction still remain therein. Therefore, it is possible for the binder resin to react not only between the parts that have undergone sol-gel reaction but also with the resin's OH groups at the time of curing binder resin by adapting the binder resin into an alkoxysilyl group-containing resin, the structure of the alkoxysilyl group being specified by formula (I).

It is possible to synthesize the aforementioned binder resins by means of publicly-known technique, respectively. For example, in the case of using an alkoxy group-containing silane-modified polyamic acid resin as the binder resin, the binder resin can be formed by reacting precursors, namely, a polyamic acid comprising a carboxylic-acid-anhydride component and a diamine component, and an alkoxysilane partial condensate. As for the alkoxysilane partial condensate, it is possible to use those which are obtained by condensing hydrolysable alkoxysilane monomers partially in the presence of acid or base catalyst and water. On this occasion, it is also permissible that the alkoxy group-containing silane-modified polyamic acid resin can be formed as follows: the alkoxysilane partial condensate is reacted with an epoxy compound in advance to turn it into an epoxy group-containing alkoxysilane partial condensate; and the resulting epoxy group-containing alkoxysilane partial condensate is then reacted with the polyamic acid.

Moreover, as for the aforementioned binder resin, it is possible to use commercial products suitably. For example, various commercial products are available as follows: "COMPOCERAN E (product name)" (produced by ARAKAWA CHEMICAL INDUSTRIES, LTD.), namely, an alkoxy group-containing silane-modified bisphenol type-A epoxy resin or alkoxy group-containing silane-modified novolac-type epoxy resin; "COMPOCERAN AC (product name) " (produced by ARAKAWA CHEMICAL INDUSTRIES, LTD.), namely, an alkoxy group-containing silane-modified acrylic resin; "COMPOCERAN P (product name)" (produced by ARAKAWA CHEMICAL INDUSTRIES, LTD.), namely, an alkoxy group-containing silane-modified phenolic resin; "COMPOCERAN H800 (product name)" (produced by ARAKAWA CHEMICAL INDUSTRIES, LTD.), namely, an alkoxy group-containing silane-modified polyamic acid resin; "COMPOCERANH700 (productname)" (producedbyARAKAWACHEMICAL INDUSTRIES, LTD.), namely, an alkoxy group-containing silane-modified soluble polyimide resin; "UREANO U (product name)" (produced by ARAKAWA CHEMICAL INDUSTRIES, LTD.), namely, an alkoxy group-containing silane-modified polyurethane resin; or "COMPOCERAN H900 (product name)" (produced by ARAKAWA CHEMICAL INDUSTRIES, LTD.), namely, an alkoxy group-containing silane-modified polyamide-imide resin.

Shown below is a chemical formula of the basic framework for each of the aforementioned following ones: "COMPOCERAN E (product name)" (produced by ARAKAWA CHEMICAL INDUSTRIES, LTD.); "COMPOCERAN AC (product name)" (produced by ARAKAWA CHEMICAL INDUSTRIES, LTD.); "COMPOCERAN P (product name)" (produced by ARAKAWA CHEMICAL INDUSTRIES, LTD.); "COMPOCERAN H800 (product name)" (produced by ARAKAWA CHEMICAL INDUSTRIES, LTD.); and "COMPOCERAN H900 (product name)" (produced by ARAKAWA CHEMICAL INDUSTRIES, LTD.). 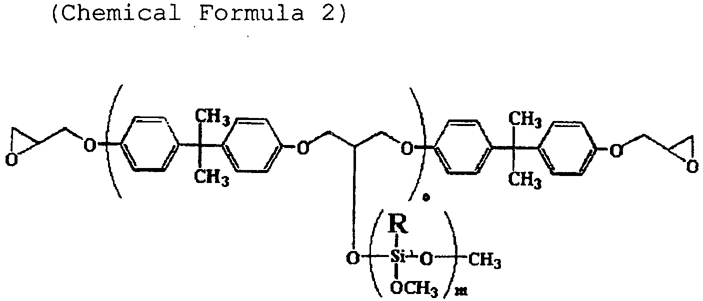 Trifunctionality: R = CH₃; or Tetrafunctionality: R = OCH₃ Bisphenol Type-A Epoxy Type, i.e., One of "COMPOCERAN E" Products 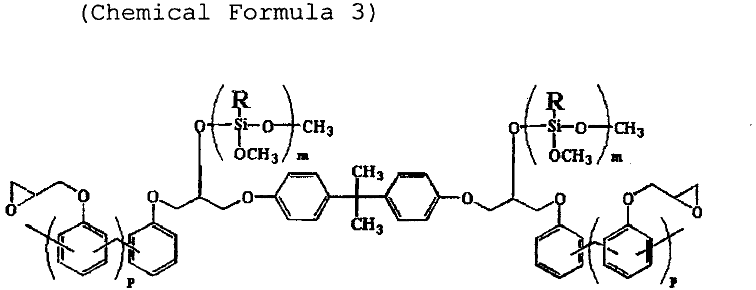 Trifunctionality: R = CH₃; or Tetrafunctionality: R = OCH₃ Phenol Novolac Epoxy Type, i.e., One of "COMPOCERAN E" Products

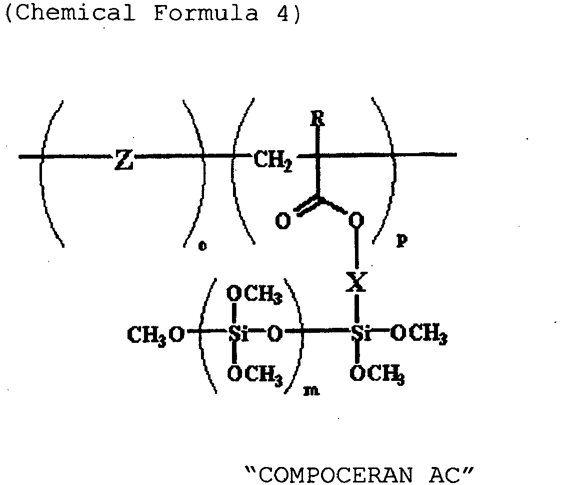

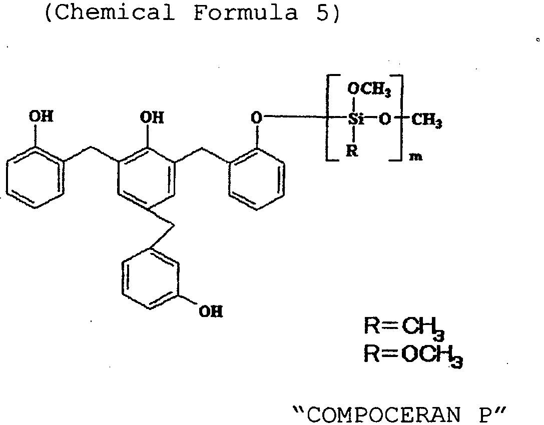

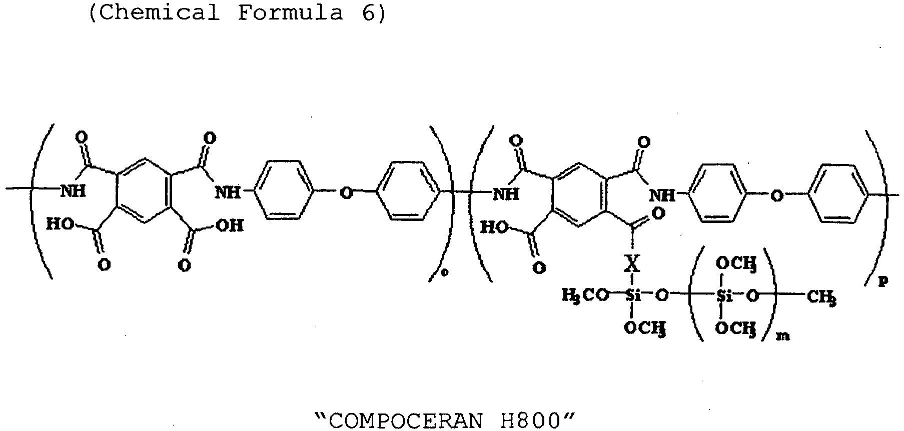

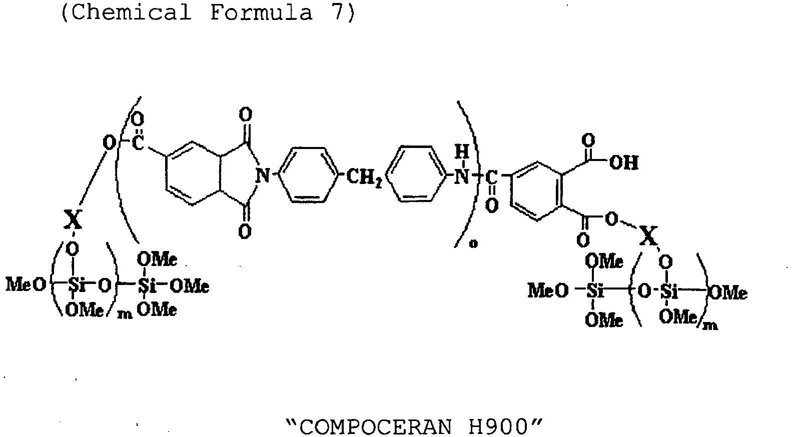

Moreover, a manufacturing process according to the First Embodiment of the present invention for negative electrode for lithium-ion secondary battery comprises an application step, and a curing step.

The application step is a step of applying a binder resin and an active material onto a surface of collector. Moreover, it is also permissible to apply a conductive additive together with them at the application step. As aforementioned, the active material includes a lithium-inactivemetal that does not for many intermetallic compounds with lithium, or a silicide of the lithium-inactive metal, and an elemental substance of Si.

The curing step is a step of curing the binder resin and then binding the active material on the collector surface. The binder resin is characterized in that it is an alkoxysilyl group-containing resin that has a structure being specified by formula (I).

At the application step, it is possible to apply the binder resin and active material onto the collector after mixing them in advance and then turning them into a slurry by adding a solvent, or the like, to the resulting mixture. It is permissible that a conductive additive can also be turned into a slurry together with them and can then be applied onto the collector. It is preferable that an applied thickness can be from 10 µm to 300 µm. Moreover, it is preferable that a mixing proportion of the binder resin and active material can be the active material: the binder resin = from 99:1 to 70:30 by parts by mass. In the case of including a conductive additive, it is preferable that a mixing proportion of the binder resin, active material and conductive additive can be the active material: the conductive additive: the binder resin = from 98:1:1 to 60:20:20 by parts by mass.

The curing step is a step of curing the binder resin, namely, an alkoxysilyl group-containing resin. The active material is bound on the collector surface by means of curing the binder resin. In the case of including a conductive additive, the conductive additive is also bound thereon similarly. It is permissible that the curing of the binder resin can be done in conformity to the curing condition of a binder resin to be made use of. Moreover, in the curing of the binder resin, a sol-gel curing reaction also occurs, sol-gel reaction which results from the structure being specified by formula (I) that the binder resin has. An alkoxysilyl group-containing resin in which the sol-gel curing reaction has occurred exhibits good adhesiveness to the active material, conductive additive and collector, because it has a structure that is made of gelated fine silica parts (or a high-order network structure with siloxane bonds).

### (First Reference Embodiment)

A binder in a negative electrode for lithium-ion secondary battery according to a first reference embodiment of the present description is an alkoxy group-containing silane-modified polyimide resinous cured substance that comprises an alkoxysilyl group that is specified by formula (II):

R¹ₘSiO_{(4-m)/2} (II)

wherein "m" = an integer of from 0 to 2; and
"R¹" designates an alkyl group or aryl group whose number of carbon atoms is 8 or less; and
which comprises an imide group and an amic acid group in a proportion of from 99:1 to 70:30.

The aforementioned binder is an alkoxysilyl group-containing resinous cured substance that has a structure being specified by formula (II): R¹ₘSiO_{(4-m)/2} wherein "m" = an integer of from 0 to 2; and "R¹" designates an alkyl group or aryl group whose number of carbon atoms is 8 or less. The structure that is specified by formula (II) is a structure that is made of gelated fine silica parts (or a high-order network structure with siloxane bonds). This structure is a structure of organic silicone polymer that comprises siloxane bonds, and is a structure that is obtainable by means of the polycondensation of silanol according to following equation (C).

nRₘSi(OH)₄₋ₘ ---> (RₘSiO_{(4-m)/2)n} Equation (C)

where "R": Organic Group, "m" = from 1 to 3, and n > 1

In addition, the aforementioned binder comprises an imide group and an amic acid group in a proportion of from 99:1 to 70:30. By means of heat treating an amic acid group, it is imidized (or it undergoes dehydration condensation) to form an imide group. This imidization reaction starts at 150 °C approximately, and is likely to proceed at 200 °C or more. It is desirable that a degree of imidization of the amic acid group can be 70% or more; to be concrete, it is preferable to imidize the binder resin until it comprises an imide group and an amic acid group in a proportion of from 99:1 to 70:30. When the proportion falls within this range, the resulting binder functions fully as a binder, and so it is possible to maintain the cyclic characteristic of negative electrode.

It is possible to control such a degree of imidization by adjusting the heating temperature, or the heating time, for instance; and it is possible to find the degree of imidization using infrared spectroscopy (or IR).

Moreover, a manufacturing process according to the first reference embodiment of the present description for negative electrode for lithium-ion secondary battery comprises an application step, and a curing step.

The application step is a step of applying a binder resin and an active material onto a surface of collector. Moreover, it is also permissible to apply a conductive additive together with them at the application step. As aforementioned, for an active material, the following can be used: carbonaceous materials that are capable of occluding and releasing lithium; and metals, which are capable of turning lithium into alloy, or oxides of these, and the like; though not being limited to these in particular. As an active material, Si or Sn is effective especially. Moreover, it is even allowable that a lithium-inactive metal that does not form any intermetallic compounds with lithium, or a silicide of the lithium-inactive metal, and an elemental substance of Si can be included therein.

The curing step is a step of curing the binder resin and then binding the active material on the collector surface. The binder resin is characterized in that: it is an alkoxysilyl group-containing resin, the structure of the alkoxysilyl group being specified by formula (I); and it is a resin that contains an amic acid group.

At the application step, it is possible to apply the binder resin and active material onto the collector after mixing them in advance and then turning them into a slurry by adding a solvent, or the like, to the resulting mixture. It is permissible that a conductive additive can also be turned into a slurry together with them and can then be applied onto the collector. It is preferable that an applied thickness can be from 10 µm to 300 µm. Moreover, it is preferable that a mixing proportion of the binder resin and active material can be the active material: the binder resin = from 99:1 to 70: 30 by parts by mass. In the case of including a conductive additive, it is preferable that a mixing proportion of the binder resin, active material and conductive additive can be the active material: the conductive additive: the binder resin = from 98:1:1 to 60:20:20 by parts by mass.

The curing step is a step of curing the binder resin, namely, an alkoxysilyl group-containing resin. The curing step includes a heating step of heating the binder resin at a temperature of from 150 °C or more to 450 °C or less. The active material is bound on the collector surface by means of curing the binder resin. In the case of including a conductive additive, the conductive additive is also bound thereon similarly. In the curing of the binder resin, a sol-gel curing reaction also occurs, sol-gel reaction which results from the structure being specified by formula (I) that the binder resin has.

At the curing step, an amic acid group is imidized (or it undergoes dehydration condensation) to form an imide group by means of being heat treated. Moreover, this imidization reaction starts at 150 °C approximately, and is likely to proceed at 200 °C or more. Therefore, even when heating the binder resin at a temperature of from 150 °C or more to 250 °C or less, the resulting binder functions fully as a binder, and so it is possible to maintain the cyclic characteristic of negative electrode. By means of this setting, even when the heating temperature is not raised to 400 °C, namely, a curing temperature that is recommended for polyimide generally, it is possible to manufacture the negative electrode for lithium-ion secondary battery that is better in terms of cyclic characteristic.

### (Second Reference Embodiment)

A method for controlling the charging of lithium-ion secondary battery according to the present description is a method for controlling the charging of a lithium-ion secondary battery in which silicon makes an active material, and that has a negative electrode in which an alkoxysilyl group-containing resin, the structure of the alkoxysilyl group being specified by formula (I) makes a binder resin.

The active material Si has a powdery configuration, and is applied and then bound on the collector's surface via the binder resin. It is preferable that the powder' s particle diameter can be 100 µm or less. Whereas a theoretical capacity of carbon is 372 mAhg⁻¹, a theoretical capacity of Si, a metal that is capable of alloying with lithium, is very high as much as 4,199 mAhg⁻¹. However, Si undergoes considerably great volumetric change that is accompanied by the insertion and elimination of lithium, compared with those of carbonaceous materials.

In the case of the lithium-ion secondary battery, lithium-containing metallic composite oxides, such as lithium-cobalt composite oxides, lithium-nickel composite oxides and lithium-manganese composite oxides, can be used as for an active material for the positive electrode, for instance.

The collector is formed as a configuration, such as a foil or plate that is formed of a highly-electron-conductive body. The configuration is not limited to above especially as far as it is a configuration that fits for the objective. As for the collector, it is possible to name copper foils, aluminum foils, and the like, for instance.

It is also possible to bind a conductive additive onto a surface of the collector together with the active material. As for the conductive additive, it is allowable to add the following, namely, carbonaceous fine particles: carbon black, graphite, acetylene black, KET JENBLACK, carbon fibers, and the like, independently; or to combine two or more species of them to add.

The binder resin is used as a binding agent when applying these active material and conductive additive to the collector. It is required for the binding resin to bind the active material and conductive additive together in an amount as less as possible, and it is desirable that that amount can be from 0.5 wt. % to 50 wt. % of a summed total of the active material, the conductive additive, and the binder resin. The binder resin that is used in the present invention is an alkoxysilyl group-containing resin,the structure of the alkoxysilyl group being specified by formula (I). The structure that is specified by formula (I) includes a structure that is made of parts having undergone sol-gel reaction, and the alkoxysilyl group-containing resin makes a hybrid composite of resin and silica.

On this occasion, as for the resin thatmakes a hybrid composite with silica, the following can be given: bisphenol type-A epoxy resins, novolac-type epoxy resins, acrylic resins, phenolic resins, polyamic acid resins, soluble polyimide resins, polyurethane resins, or polyamide-imide resins.

It is possible to synthesize each of the aforementionedbinder resins by means of publicly-known technique in the same manner as explained in the First Embodiment. Moreover, as for the above binder resin, it is possible to suitably use the commercial products that have been mentioned above.

It is possible to manufacture the above electrode for secondary battery by means of applying the binder resin and active material onto the collector after mixing them in advance and then turning them into a slurry by adding a solvent, or the like, to the resulting mixture. It is permissible that a conductive additive can also be turned into a slurry together with them and can then be applied onto the collector. It is preferable that an applied thickness can be from 10 µm to 300 µm. Moreover, it is preferable that a mixing proportion of the binder resin and active material can be the active material: the binder resin = from 99:1 to 70:30 by parts by weight. In the case of including a conductive additive, it is preferable that a mixing proportion of the binder resin, active material and conductive additive can be the active material: the conductive additive: the binder resin = from 98:1:1 to 60:20:20 by parts by weight.

"Curing" is to cure the binder resin, namely, an alkoxysilyl group-containing resin. The active material is bound on the collector surface by means of curing the binder resin. In the case of including a conductive additive, the conductive additive is also bound thereon similarly. It is permissible that the curing of the binder resin can be done in conformity to the curing condition of a binder resin to be made use of. Moreover, in the curing of the binder resin, a sol-gel curing reaction also occurs, sol-gel reaction which results from the structure being specified by formula (I) that the binder resin has. An alkoxysilyl group-containing resin in which the sol-gel curing reaction has occurred exhibits good adhesiveness to the active material, conductive additive and collector, because it has a structure that is made of gelated fine silica parts (or a high-order network structure with siloxane bands).

A method for controlling the charging of lithium-ion secondary battery according to the present description is a method for controlling the charging of a lithium-ion secondary battery having the negative electrode that has been mentioned above, charging control method in which a charge capacity is controlled so as to make a volumetric change of silicon resulting from the alloying with lithium 2.5 times or less than a volume of an elemental substance of the silicon. By means of controlling a charge capacity so that a volumetric change of silicon is 2.5 times or less than the above specific volume, it is possible to inhibit the volumetric change that is accompanied by the occlusion/release of lithium, and so it is possible to make the lithium-ion secondary battery exhibit a much longer longevity.

The following concretely show proportions of the volumetric expansions of silicon with respect to the original volume thereof in the insertion of lithium into silicon. When lithium is inserted into silicon, the silicon is alloyed as shown below:

Si ---> Li₁₂Si₇ ---> Li₁₄Si₆ ---> Li₁₃Si₄ ---> Li₂₂Si₅

The theoretical capacity of Li₁₂Si₇ is 1, 636 mAh/g, and the volumetric expansion is 2. 9 times with respect to that of silicon; the theoretical capacity of Li₁₄Si₆ is 2,227 mAh/g, and the volumetric expansion is 2. 6 times with respect to that of silicon; the theoretical capacity of Li₁₃Si₄ is 3, 102 mAh/g, and the volumetric expansion is 3.4 times with respect to that of silicon; and the theoretical capacity of Li₂₂Si₅ is 4,199 mAh/g, and the volumetric expansion is 4.1 times with respect to that of silicon. That is, when charging is carried out up to the theoretical capacity of silicon, the silicon expands the volume up to 4.1 times with respect to its own original volume.

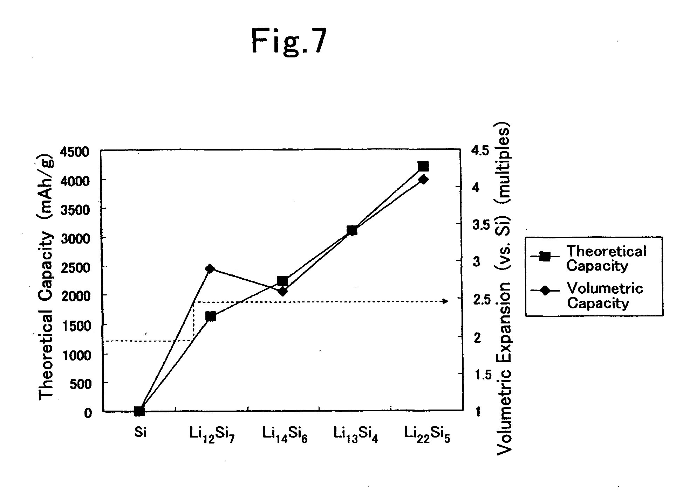

It was found out that lithium-ion secondary batteries come to exhibit a much longer longevity by means of controlling the charge capacity so that a volumetric change of silicon in the negative electrode is 2.5 times or less of its own original volume. The value, 2.5 times, was found from a graph that illustrated a relationship between the theoretical capacity of silicon being alloyed with lithium and the volumetric expansion thereof. This graph is shown in Fig. 7. According to Fig. 7, it
was found that a proportion of the volumetric expansion is 2.5 times when the entire electrode exhibits a charge capacity of 1,000 mAh/g (whereas a charge capacity of silicon elemental substance is 1,176 mAh/g), namely, a condition in a cyclic test in which Electrode No. 10 being specified in one of the following examples was used.

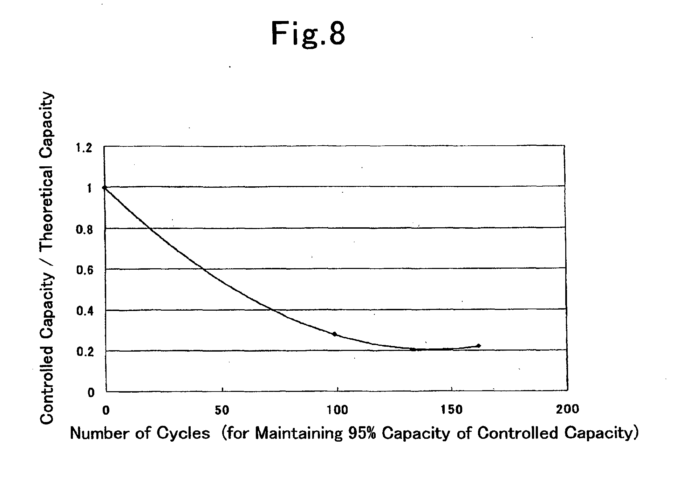

Moreover, a method for controlling the charging of lithium-ion secondary battery is a method for controlling the charging of a lithium-ion secondary battery having the negative electrode that has beenmentioned above, charging control method in which a charge capacity is controlled so as to be the charge capacity/a theoretical capacity of silicon ≦ 0.3. The number, 0.3, is found from the following: 0.281, namely, a value that is obtained by dividing 1,176 mAh/g (i.e., a charge capacity per unit weight of silicon) by 4, 199 mAh/g (i.e., a theoretical capacity of silicon); and Fig. 8.

In Fig. 8, a graph is illustrated, graph which compares a number of cycles, up to which 95% of a controlled charge capacity can be maintained, with the controlled capacity/a theoretical capacity. As the theoretical capacity, 4,199 mAh/g, namely, a theoretical capacity of Si, was used. When observing this Fig. 8, it is seen how well it is to what extent the charge capacity is controlled in order to maintain the capacity at the 95% of the controlled capacity up to the required number of cycles. For example, it is allowable to set the controlled capacity/theoretical capacity to about 0.3 or less in order to attain a number of cycles that is 100 times or more.

It is preferable to control the charge capacity so as to set the charge capacity per unit weight of silicon to 1,176 mAh/g or less; moreover, it is more preferable to set it to 941 mAh/g or less. Bymeans of controlling the charge capacity to numerical values like these, the durability of the lithium-ion secondary battery upgrades remarkably, and so the cyclic characteristic upgrades.

### (Third Reference Embodiment)

An electrode for secondary battery according to the present description comprises a collector comprising an aluminum nonwoven fabric, and an active material being loaded on the collector.

The collector is formed of an aluminum nonwoven fabric that comprises fibers of pure aluminum or an aluminum alloy, whose fibrous diameter is from 50 to 100 µ m, whose weight per unit area is from 300 to 600 g/m², and whose porosity is from 50 to 96%.

It is possible to make the aforementioned aluminum nonwoven fabric by means of doing as follows : piling up fibers of pure aluminum or an aluminum alloy whose fibrous diameter is from 50 to 100 µ m; adjusting the weight per unit area so as to be from 300 to 600 g/m²; and then adjusting the porosity so as to be from 50 to 96%. Moreover, this aluminum nonwoven fabric exhibits flexibility. The "flexibility" in this case indicates such an extent of flexibility that makes it possible to wind it or roll it up and then makes it possible to encapsulate it in a cylindrical or rectangular armoring can.

Those whose purity is 99.0% or more are referred to as "pure aluminum," and those in which various elements are added to make alloys are referred to as "aluminum alloys." As the aluminum alloys, it is possible to give Al-Cu-system alloys, Al-Mn-system alloys, Al-Si-system alloys, Al-Mg-system alloys, Al-Mg-Si-system alloys, Al-Zn-Mg-system alloys, and the like.

Moreover, it is possible to produce the fibers of pure aluminum or an aluminum alloy whose fibrous diameter is from 50 to 100 µ m by means of extruding pure aluminum or an aluminum alloy, which has been melted, into water.

In this instance, it is desirable to adjust the weight per unit area so as to be from 300 to 600 g/m² in the resulting aluminum nonwoven fabric, and then to adjust the porosity so as to be from 50 to 96% therein. When the weight per unit area and the porosity are set to fall in the aforementioned ranges, the active material can be filled up in a higher density, and it is possible to keep strength as collector per se even when the resulting collector is wound or rolled up.

Moreover, the aluminum nonwoven fabric has such an extent of thickness in forming the electrode for secondary battery, thickness which enables the resultant aluminum nonwoven fabric to be wound or rolled up and then be encapsulated in a cylindrical or rectangular armoring can. To be concrete, it is desirable that the aluminum nonwoven fabric can have a thickness of 1 mm or less upon forming the electrode for secondary battery. Moreover, setting the thickness so as to be from 100 to 300 µm is furthermore preferable.

It is possible to utilize the loaded active material effectively by means of making the thickness of the collector thinner, because the distance from the collector to the active material that is loaded on the collector becomes shorter so that the migration distance of electrons becomes shorter between the active material and the collector. Moreover, the aluminum nonwoven fabric becomes likely to be wound or rolled up by means of making the thickness thinner.

Although the substance that makes the active material differs depending on the types of secondary battery, it is not limited especially as far as being one into which substances that fit for the objective of that secondary battery are inserted and from which those substances are released reversibly by means of charging/discharging. The active material has a powdery configuration, and is loaded in the pores of the collector and on the surface thereof.

It is possible to carry out the loading of the active material onto the aluminum nonwoven fabric by means of the following: impregnating the aluminum nonwoven fabric with a slurry that is made by adding a solvent to a dispersion liquid comprising an active material, a conductive additive and a binder resin and then stirring the resultant mixture; or coating the aforementioned slurry down into the aluminum nonwoven fabric. Moreover, contrary to aluminum foils, since the aluminum nonwoven fabric has a three-dimensional structure, it is possible to immobilize the active material within the collector even when making use of the binder resin less or not even making use of it at all.

Although a powder that makes the active material differs depending on batteries that are aimed for, it is preferable that the particle diameter can be 5 µm or less. The finer the particle diameter is, the more the active material can be filled up into the aluminum nonwoven fabric in a higher density.

In the case of lithium-ion secondary battery, lithium-containing metallic composite oxides, such as lithium-cobalt composite oxides, lithium-nickel composite oxides and lithium-manganese composite oxides, can be used as for an active material for the positive electrode. For an active material for the negative electrode, the following can be used: carbonaceous materials that are capable of occluding and releasing lithium; and metals, which are capable of turning lithium into alloy, or oxides of these, and the like.

Among them, in the case of the electrode for secondary battery according to the present description, it is possible to make use of the active material efficiently even when using a low electrically-conductive active material. Consequently, it is possible to reduce a conductive additive that is loaded together with the active material; so, it is possible to make an amount of the active material greater by that extent; and thereby it is possible fill up the active material in a much higher density. Moreover, since it is possible to make use of the active material efficiently, it is possible to suppress the degradation of cyclic characteristic.

For example, it is possible to use an olivine-type LiFePO₄ (namely, one of polyanion-system active materials), which has been drawing attention recently as a positive-electrode material that exerts lower load to environments and whose cost is super low, as a low electrically-conductive positive-electrode active material.

A conductive additive is one which is added in order to enhance electric conductivity when the active material is bound on the collector via the binder resin. As for the conductive additive, it is allowable to add the following, namely, carbonaceous fine particles: carbon black, graphite, acetylene black, KETJENBLACK, carbon fibers, and the like, independently; or to combine two or more species of them to add.

The binder resin is used as a binding agent when loading these active material and conductive additive onto the collector. It is required for the binding resin to bind the active material and conductive additive together in an amount as less as possible, and it is desirable that that amount can be from 0.5 wt. % to 50 wt. % of a summed total of the active material, the conductive additive, and the binder resin.

The binder resin in the electrode for secondary battery is not limited in particular, and so it is possible to use any one of publicly-known binder resins therefor. As the binder resin, it is possible to give the following that are not decomposed when being subjected to positive-electrode potentials, and which exhibit adhesive power, for instance: fluoro-system polymers, such as polytetrafluoroethylene and polyvinylidene fluoride (or PVdF); polyolefin-system polymers, such as polyethylene and polypropylene; styrene-butadiene-system synthetic rubbers; calcined bodies of resins; and the like.

Moreover, without using any binder resin, it is even permissible to use a solvent which is capable of dispersing the active material therein.

Moreover, a nonaqueous system secondary battery according to the present description is a nonaqueous system secondary battery that is equipped with:
a positive electrode being equipped with a collector that comprises a positive-electrode active material, the collector comprising an aluminum nonwoven fabric that comprises fibers of pure aluminum or an aluminum alloy, whose fibrous diameter is from 50 to 100 µm, whose weight per unit area is from 300 to 600 g/m², and whose porosity is from 50 to 96%; and
a negative electrode being equipped with a collector that comprises a negative-electrode active material;
a separator; and
a nonaqueous system electrolyte.

It is allowable for the nonaqueous system secondary battery to comprise the aforementioned positive electrode alone; regarding the other constituent elements, it is possible to apply it the respective constituent elements that have been employed heretofore in publicly-known nonaqueous system secondary batteries.

As for the negative electrode of the nonaqueous system secondary battery, it is possible to give one which is made as follows, for instance: forming a slurry by adding a solvent to a dispersion liquid comprising a negative-electrode active material, a conductive additive and a binder resin; and then loading the resultant slurry onto a collector. As the negative-electrode active material, it is possible to use not only carbonaceous materials, lithium and lithium-containing compounds but also oxide-system materials such as oxides of Sn and oxides of Si.

The conductive additive is not limited especially as far as being an electron-conductive material, and it does not matter at all if it is not made use of. As for specific examples of the conductive additive, it is possible to give the following: carbon blacks; conductive fibers, such as carbon fibers and metallic fibers; fluorinated carbons; powders of metals, such as copper and nickel; organic conductive materials, such as polyphenylene derivatives; and the like; note that it is also permissible to use one member of these independently or it does not matter to use two or more members of them combinedly.

The binder resin is not limited in particular, and so it is possible to use any one of publicly-known binder resins therefor.

As for the nonaqueous system electrolyte that is directed to the nonaqueous system secondary battery,

it is possible to make use of a solution (i.e., a nonaqueous system electrolyte) that comprises a solvent exhibiting a wide electric-potential window, and an indicator salt, and which is prepared by dissolving one of inorganic-ion salts being mentioned below in one of nonaqueous system solvents being mentioned below, for instance.

As for the nonaqueous system solvents, it is possible to use one member of the following aprotic organic solvents independently, or to use them as a mixture solvent in which two or more members of them are mixed: ethylene carbonate (or EC), propylene carbonate (or PC), butylene carbonate (or BC), dimethyl carbonate (or DMC), diethyl carbonate (or DEC), methyl ethyl carbonate (or MEC), γ -butyrolactone, 1,2-dimethoxyethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric triester, trimethoxymethane, dioxolane derivaties, sulfolane, 3-methyl-2-oxazolidinone, propylene carbonate derivatives, tetrahydrofuran derivaties, diethylether, and 1,3-propane sultone, and the like.

As for the inorganic-ion salt, it is possible to give at least one member that is selected from the following lithium salts, for instance: LiClO₄, LiPF₆, LiBF₄, LiAsF₆, LiSbF₆, LiCF₃SO₃, LiCF₃CO₂, Li₂C₂F₄(SO₃)₂, LiN(CF₃SO₂)₂, LiC(CF₃SO₂)₃, LiCₙF₂ₙ₊₁SO₃ (where n ≧ 2), LiN(RfOSO₂)₂ (where "Rf" is an fluoroalkyl group herein), and the like.

Moreover, a separator in which the aforementioned nonaqueous system electrolyte is included is disposed between the aforementioned positive electrode and the aforementioned negative electrode. As for the separator, an insulating microporous thin film can be used, insulating microporous thin film which exhibits large ion permeability and predetermined mechanical strength. To be concrete, as the separator, it is possible to give the following: polyolefin-system polymers (or polyethylene, polypropylene, and the like) that exhibit organic-solvent resistance and hydrophobic property; or sheets (or porous sheets) that are constituted of glass fibers, and so forth; nonwoven fabrics or woven fabrics; or porous bodies that are made by fastening fine particles of the polyolefin-based polymers with adhesive agents; and so on.

It is possible to turn the nonaqueous system secondarybattery into a high-density and compact nonaqueous system secondary battery, because it is possible to wind or roll up the electrode due to the setting that it comprises the positive electrode that is equipped with the collector comprising the aforementioned aluminum nonwoven fabric. Moreover, it is possible to use this nonaqueous system secondary battery suitably for consumer applications, automative applications, stationary-type backup applications, and the like, where lithium-ion secondary batteries are usable currently.

### EXAMPLES

### (Examples according to First Means)

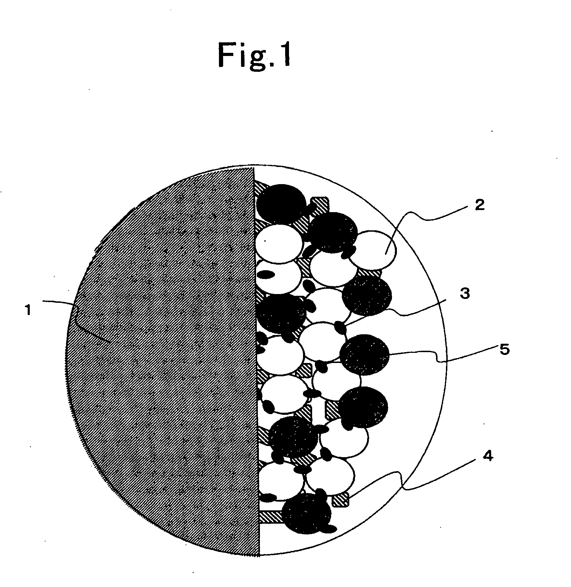

Hereinafter, the present invention will be explained in more detail while giving examples. A partial schematic explanatory diagram of a negative electrode for lithium-ion secondary battery according to a first means of the present invention is illustrated in Fig. 1. An example of the negative electrode for lithium-ion secondary battery according to the first means of the present invention is one in which Si elemental substances 2, lithium-inactive metals or lithium-inactive-metallic silicides 5, and conductive additives 3 are bound on a surface of collector 1 via binder resins 4.

The binder resins 4 are dispersed between the dispersed Si elemental substances 2, the dispersed lithium-inactive metals or lithium-inactive-metallic silicides 5, the dispersed conductive additives 3 and the collector 1. And, the binder resins 4 join the Si elemental substances 2, the lithium-inactive metals or lithium-inactive-metallic silicides 5, the conductive additives 3 and the collector 1 one another to put them together.

Since Fig. 1 is a schematic drawing, the drawn configurations are not correct ones. Although the binder resins 4 are depicted as a powdery configuration in Fig. 1, they have indeterminate forms. Moreover, as shown in Fig. 1, the entire surface of the collector 1 is not covered with the binder resins 4, the Si elemental substances 2, the lithium-inactive metals or lithium-inactive-metallic silicides 5 and/or the conductive additives 3 completely, but minute pores exist between the respective substances and the surface of the collector 1 here and there.

The negative electrode for lithium-ion secondary battery according to the first means of the present invention was made as follows, and then a discharging cyclic test was carried out using a model battery for evaluation. In the test, a coin-shaped lithium-ion secondary battery was used, coin-shaped lithium-ion secondary battery in which the negative electrode was adapted into an electrode to be evaluated.

### (Making of Electrodes for Evaluation)

In Table 1, the constituent components of each of the electrodes for evaluation, and their mixing proportions are shown. As an active material, an Si elemental substance, and a lithium-inactive metal or a silicide of the lithium-inactive metal were used. Note that an Si powder and a ferrous metallic powder were used in Testing Example No. 1; an Si powder and an MoSi₂ powder were used in Testing Example Nos. 2 and 3; and only an Si powder was used in Testing Example Nos. 4 and 5.

As the Si powder, Si particles (produced by KOJUNDO CHEMICAL LABORATORY Co., Ltd.) with 4-µm-or-less particle diameters were made use of as they were. As the ferrous metallic powder, iron particles (produced by KOJUNDO CHEMICAL LABORATORY Co., Ltd.) with from-3-to-5-µm particle diameters were used. As for the MoSi₂ powder, MoSi₂ particles (produced by FUKUDA METAL FOIL & POWDER Co., Ltd.) with 8-µm average particle diameter were used.

Moreover, as the conductive additive, KETJENBLACK (or KB produced by KETJENBLACK INTERNATIONAL Corp.) was used.

In Testing Example No. 1 through Testing Example No. 4, an alkoxy group-containing silane-modified polyamic acid resin was used for the binder resin, alkoxy group-containing silane-modified polyamic acid resin which was produced by ARAKAWA CHEMICAL INDUSTRIES, LTD.; whose product name was COMPOCERAN; whose product number was H850D; whose solvent composition was N,N-dimethylacetamide (or DMAc); which had cured residuals in an amount of 15%; which exhibited a viscosity of 4,100 mPa· s at 25 °C; and which had silica in an amount of 2 wt. % in the cured residuals. The alkoxy group-containing silane-modified polyamic acid resin was one of aforementioned COMPOCERAN (product name) H800-series products, and had a structure that is specified in above (Chemical Formula 6). In Testing Example No. 5, PVdF (produced by KUREHA) was used as the binder resin.

The respective active materials were mixed in the proportions shown Table 1. In Testing Example No. 1, the mass proportions were set so that a molar ratio of Si to Fe was Si: Fe = 2:1. This is a mixing ratio when a mass ratio was set at 1:1. In Testing Example No. 2, Si and MoSi₂ were mixed in a mass proportion so that volumes that they occupied were 1:1 virtually. In Testing Example No. 3, they were mixed in a mass proportion so that their volumes were Si: MoSi₂ = 1:2 roughly. In Testing Example No. 4 and Testing Example No. 5, the Si elemental substance alone made the active material but only the binder resins were distinct from one another; however, the mixing proportions were equal to each other. In the invention of the present application, Testing Example Nos. 1 through 3, and Testing Example Nos. 4 and 5 correspond to examples and comparative examples, respectively.

For example, a slurry was prepared in Testing Example No. 1 as follows: a mixture powder of 43%-by-weight Si powder and 42%-by-weight iron powder was put in 10%-by-weight paste in which the alkoxy group-containing silane-modified polyamic acid resin was dissolved in N-methylpyrrolidone (or NMP); 5%-by-weight KETJENBLACK (or KB) was further added thereto; and then the resulting mixture was mixed. In other Testing Example Nos. 2 through 5, slurries were prepared by similar operations.

After preparing the aforementioned slurries, the slurries were put on an electrolytic copper foil with 18-µm thickness, and were then formed as a film on the copper foil, respectively, using a doctor blade.

After drying the thus obtained sheets at 80 °C for 20 minutes and then removing NMP by evaporation, a collector, which comprised the electrolytic copper foil, and negative-electrode layers, which comprised the aforementioned complex powders, were joined together firmly by means of adhesion with a roller pressing machine. These were punched out with a 1-cm² circular punch, and were then adapted into an electrode with 100-µm-or-less thickness by vacuum drying them as follows, respectively: at 200 °C for 3 hours in Testing Example No. 1 through Example No. 4; and at 140 °C for 3 hours in Testing Example No. 5.

**(TABLE 1)**

| Testing Ex. No. | M | Binder Resin | Mass Ratio (wt. %) | | | |
|---|---|---|---|---|---|---|
| | | | Si | M | KB | Binder Resin |
| 1 | Fe | Alkoxy group-containing Silane-modified Polyamic Acid Resin | 43 | 42 | 5 | 10 |
| 2 | MoSi₂ | Alkoxy group-containing Silane-modified Polyamic Acid Resin | 25 | 62 | 4 | 9 |
| 3 | MoSi₂ | Alkoxy group-containing Silane-modified Polyamic Acid Resin | 28 | 57 | 5 | 10 |
| 4 | - | Alkoxy group-containing Silane-modified Polyamic Acid Resin | 85 | - | 5 | 10 |
| 5 | - | PVdF (Polyvinylidene Fluoride) | 85 | - | 5 | 10 |

### (Making of Coin-shaped Batteries)

Coin-shaped model batteries (type "CR2032") were made within a glove box in an Ar atmosphere while adapting the aforementioned electrodes into the negative electrode, adapting metallic lithium into the positive electrode, and adapting a solution, namely, 1-mol LiPF₆/ethylene carbonate (or EC) + diethyl carbonate (or DEC) where EC:DEC = 1:1 (by volume ratio), into the electrolyte. The coin-shaped model batteries were made by overlapping a spacer, an Li foil with 500- µm thickness making a counter electrode, a separator ("Celgard #2400" (trademark name) produced by CELGARD, LLC), and the evaluation electrodes in this order, and then subjecting them to a crimping process.

### (Evaluation for Coin-shaped Batteries)

An evaluation of each of the electrodes to be evaluated in these model batteries were carried out by the following method. First of all, the model batteries were discharged at a constant electric current of 0.2 mA until reaching 0 V, and were then charged at a constant electric current of 0.2 mA until reaching 2.0 V after having a 5-minute intermission. These were considered 1 cycle, and the charging/discharging was carried out repeatedly to examine their charge capacities.

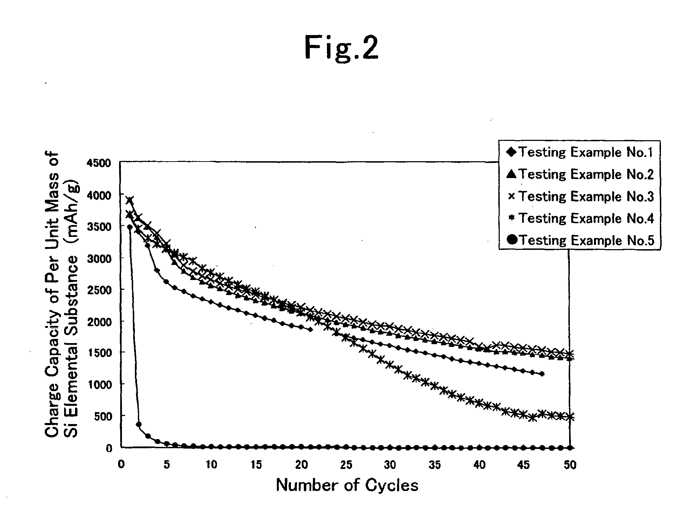

Fig. 2 illustrates a graph that shows the number of the cycles and the charge capacities per unit mass of the Si elemental substance which are relevant to the model batteries according to the respective testing examples. First of all, it is apparent from Fig. 2 that the decrease magnitudes of the initial charge capacity were small in the batteries in which the electrodes according to Testing Example Nos. 1 through 4 were adapted into the evaluation electrode, compared with that of the battery in which the electrode according to Testing Example No. 5 was adapted into the evaluation electrode. That is, as Testing Example No. 5 indicates, the charge capacity fell sharply down to almost 10% approximately after the cyclic test was done once in the electrode in which PVdF, namely, a conventional binder resin was used; whereas the charge capacities were maintained as much as from 70 to 80% approximately in Testing Example Nos. 1 through 4 in which the alkoxy group-containing silane-modified polyamic acid resin was used for the binder resin. Besides, it is possible to see that Testing Example No. 5 exhibited a charge capacity that was zero after 10 cycles; whereas the charge capacities after 10 cycles were maintained as much as 50% or more in Testing Example No. 1 through Testing Example No. 4.

Moreover, when comparing Testing Example No. 1 through Testing Example No. 3, which included an Si elemental substance and a lithium-inactive metal or a silicide of the lithium-inactive substance in the active material, with Testing Example No. 4 in which an Si elemental substance alone made the active material, it is possible to see that the way of the decline in the charge capacity after the 20th cycle or later became gentle in Testing Example Nos. 1 through 3 compared with that in Testing Example No. 4.

Moreover, as can be viewed also from Fig. 2, the way of the decline in the charge capacity was gentler in Testing Example No. 2 and Testing Example No. 3, which included an Si elemental substance and MoSi₂ in the active material, than in Testing Example No. 1. This appears to result from the fact that MoSi₂, which was put in the active material of Testing Example Nos. 2 and 3, is harder than iron, which was put in the active material of Testing Example No. 1. It is believed that the cyclic characteristic was upgraded more by means of the operation that the hard MoSi₂ suppressed the cracks and coming-off resulting from the volumetric expansion of Si that was accompanied by the occlusion/release of lithium. Moreover, as can be viewed also from Fig. 2, although Testing Example No. 2 and Testing Example No. 3 differed in the mixing proportions, there was no such a great difference in terms of their cyclic characteristics.

### (Reference Examples according to Second Means)

Hereinafter, the second means of the present description will be explained in more detail while giving examples.

The negative electrode for lithium-ion secondary battery was made as follows, and then a discharging cyclic test was carried out using a model battery for evaluation. In the test, a coin-shaped lithium-ion secondary battery was used, coin-shaped lithium-ion secondary battery in which the negative electrode was adapted into an electrode to be evaluated.

### (Evaluation for Resinous Characteristics Depending on Curing-temperature Differences)

First of all, resinous characteristics that depended on curing-temperature differences were measured. An alkoxy group-containing silane-modified polyamic acid resin, which was produced by ARAKAWA CHEMICAL INDUSTRIES, LTD., whose product name was COMPOCERAN, whose product number was H850D and whose solvent composition was N,N-dimethylacetamide (or DMAc), was cured at each of the following curing temperatures: 150 °C, 200 °C, and 430 °C; and then a degree of imidization of each of the resulting resins that was cured at each of the curing temperatures was measured. The degrees of imidization were obtained as follows: an infrared spectroscopy (or IR) was carried out on the respective cured substances; the degree of imidization in the products that were heat treated at 430 °C was assumed to be 100%; and the degrees of imidization in the other cured substances that were processed at the other curing temperatures were calculated from the absorbance ratios between the stretching vibration band of benzene-ring skeleton structure (i.e., at around 1, 500 cm⁻¹) and the absorption band of imide carbonyl group (i.e., at around 1,780 cm⁻¹). The results are shown in Table 2.

**(TABLE 2)**

| Heat Treatment Temp. (°C) | Degree of Imidization |
|---|---|
| 150 | 69 |
| 200 | 84 |
| 430 | 100 |

As shown in TABLE 2, it is possible to see that about 70% or more was available in the degree of imidization when the curing temperature was 150 °C or higher.

Next, using the aforementioned cured product and the other cured products whose curing temperature was 200 °C and 430 °C, respectively, their tensile strengths were measured. In that instance, PVdF (produced by KUREHA) was evaluated similarly. As the test specimens, films being made of the respective resins were made in a thickness of from 20 to 30 µm, and were then made as test specimens whose width was 5 mm and length was 20 mm. The test was carried out under such conditions that the distance between chucks was set at 20 mm and the tensile rate was set at 5 mm/min, thereby finding the strengths at rupture, and the like. The results are shown in Table 3.

**(TABLE 3)**

| Name of Sample | H850D | | PVdF |
|---|---|---|---|
| Curing Temp. (°C) | 430 | 200 | - |
| Modulus of Elasticity (GPa) | 5.6 | 4.4 | 1.5 |
| Strength at Rupture (MPa) | 340 | 190 | 36 |
| Elongation at Rupture (%) | 25 | 24 | 7 |

As shown in TABLE 3, the alkoxy group-containing silane-modified polyamic acid resin, which was produced by ARAKAWA CHEMICAL INDUSTRIES, LTD. and whose product number was H850D, made a 200-°C cured product whose modulus of elasticity was 4.4 GPa that was larger by 3 times approximately compared with 1.5 GPa, namely, a modulus of elasticity being exhibited by the PVdF. It was possible to see from this that even the 200-°C cured product can suppress the expansion/contraction of active material and accordingly does not have any problems as a binder resin.

In order just to make certain, a test, in which the aforementioned films were immersed into an electrolyte, was carried out. The 430-°C cured product, which was made from the alkoxy group-containing silane-modified polyamic acid resin that was used in the aforementioned tensile test, was cut out to a size of 5 cm × 5 cm, and the resulting cut-out samples were then put in a 50-°C constant-temperature container for 24 hours to subject them to humidity conditioning. Thereafter, their weights were measured in it, and the resultant cut-out samples were immersed into a mixture electrolyte, namely, ethylene carbonate (or EC): diethyl carbonate (or DEC) = 1% by volume: 1% by volume, and were then kept therein at 23 °C for 24 hours. After taking the films out therefrom and then wiping out liquid on their surfaces, their weights were measured. When calculating a weight incremental rate from the weights before and after the immersion, the resultant weight incremental rate was -0.3%. It was judged from this that electrolytes do not result in any affects that cause problems especially, because the weight incremental rate was 0% virtually.

### (Making of Electrodes for Evaluation)

An Si powder was used as an active material; and the aforementioned alkoxy group-containing silane-modified acid polyamic resin which was produced by ARAKAWA CHEMICAL INDUSTRIES, LTD. and whose product number was H850D, and PVdF were used as a binder resin, respectively, thereby making electrodes. As the Si powder, Si particles, which were produced by KOJUNDO CHEMICAL LABORATORY Co., Ltd. and whose particle diameters were 4 µm or less, were made use of as they were. Moreover, as the conductive additive, KETJENBLACK (or KB produced by KETJENBLACK INTERNATIONAL Corp.) was used.

### (Testing Example No. 6)

In Testing Example No. 6, an alkoxy group-containing silane-modified polyamic acid resin was used, alkoxy group-containing silane-modified polyamic acid resin which was produced by ARAKAWA CHEMICAL INDUSTRIES, LTD.; whose product name was COMPOCERAN; whose product number was H850D; whose solvent composition was N,N-dimethylacetamide (or DMAc); which had cured residuals in an amount of 15%; which exhibited a viscosity of 4, 100 mPa· s at 25 °C; and which had silica in an amount of 2 wt. % in the cured residuals. The alkoxy group-containing silane-modified polyamic acid resin was one of aforementioned COMPOCERAN (product name) H800-series products, and had a structure that is specified in above (Chemical Formula 6).

In Testing Example No. 6, a slurry was prepared as follows: the Si powder was put in a paste in which the alkoxy group-containing silane-modified polyamic acid resin was dissolved in N-methylpyrrolidone (or NMP) ; KETJENBLACK (or KB) was further added thereto; and then the resulting mixture was mixed. The mixing proportion was set at Si: Resin: KB = 80:15:5 by wt. %.

After preparing the slurry, the slurry was put on an electrolytic copper foil with 18-µm thickness, and was then formed as a film on the copper foil using a doctor blade.

After drying the thus obtained sheet at 80 °C for 20 minutes and then removing NMP by evaporation, a collector, which comprised the electrolytic copper foil, and a negative-electrode layer, which comprised the aforementioned complex powder, was joined together firmly by means of adhesion with a roller pressing machine. This one was punched out with a 1-cm² circular punch, and was then adapted into an electrode with 100-µm-or-less thickness by vacuum drying it at 200 °C for 3 hours. This electrode was labeled an electrode according to Testing Example No. 6.

### (Testing Example No. 7)

Except that the heating temperature at the time of making an electrode was set as follows: at 120 °C for 10 minutes; at 200 °C for 10 minutes subsequently; and at 430 °C for 10 minutes subsequently, an electrode according to Testing Example No. 7 was made in the same manner as Testing Example No. 6.

### (Testing Example No. 8)

Except that the binder resin was made of PVdF (produced by KUREHA), and that the heating temperature at the time of making an electrode was set at 140 °C for 3 hours, an electrode according to Testing Example No. 8 was made in the same manner as Testing Example No. 6.

### (Making of Coin-shaped Batteries)

Coin-shaped model batteries (type "CR2032") were made within a glove box in an Ar atmosphere while adapting the aforementioned electrodes into the negative electrode, adapting metallic lithium into the positive electrode, and adapting a solution, namely, 1-mol LiPF₆/ethylene carbonate (or EC) + diethyl carbonate (or DEC) where EC: DEC= 1:1 (by volume ratio), into the electrolyte. The coin-shaped model batteries were made by overlapping a spacer, an Li foil with 500-µm thickness making a counter electrode, a separator ("Celgard #2400" (trademark name) produced by CELGARD, LLC), and the evaluation electrodes in this order, and then subjecting them to a crimping process.

### (Evaluation for Coin-shaped Batteries)

An evaluation of each of the electrodes to be evaluated in these model batteries were carried out by the followingmethod. First of all, the model batteries were discharged at a constant electric current of 0.2 mA until reaching 0 V, and were then charged at a constant electric current of 0. 2 mA until reaching 2.0 V after having a 5-minute intermission. These were considered 1 cycle, and the charging/discharging was carried out repeatedly to examine their charge capacities.

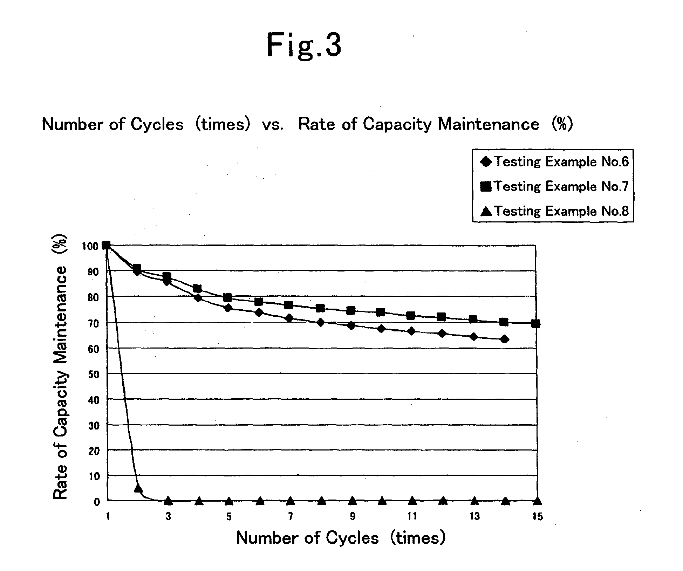

Fig. 3 illustrates a graph that shows the number of the cycles and the charge capacities which are relevant to the model batteries according to the respective testing examples. First of all, it is apparent from Fig. 3 that the decrease magnitudes of the initial charge capacity were small in the batteries in which the electrodes according to Testing Example Nos. 6 and 7 were adapted into the evaluation electrode, compared with that of the battery in which the electrode according to Testing Example No. 8 was adapted into the evaluation electrode.

That is, in the electrode according to Testing Example No. 8 in which PVdF, namely, a conventional binder resin was used, the charge capacity fell sharply down to almost 5% approximately after the cyclic test was done once; whereas the charge capacities were maintained as much as 90% approximately in the electrodes according to Testing Example Nos. 6 and 7 in which the alkoxy group-containing silane-modified polyamic acid resin was used for the binder resin. Besides, it is possible to see that, in the electrode according to Testing Example No. 8, the charge capacity was zero after 2 cycles; whereas the charge capacities after 13 cycles were maintained as much as 60% or more in the electrodes according to Testing Example Nos. 6 and 7.

Note herein that the curing temperatures for the binder resin differed in Testing Example No. 6 and Testing Example No. 7 and therefore the degrees of imidization differed in the resin. Although it is seen from Fig. 3 that the electrode according to Example No. 7 in which the curing temperature was higher was slightly good in terms of the cyclic characteristic compared with that of the electrode according to Testing Example No. 6, the charge capacity after 13 cycles was maintained as much as 60% or more even in the electrode according to Testing Example No. 6 in which the curing temperature was 200 °C. It was possible to ascertain from this that a good advantageous effect was produced as a binder resin even when the curing temperature was lower.

From those being mentioned above, it is possible to suppress the coming off or falling down, which results from the expansion of Si that is accompanied by the occlusion/release of lithium ion, by means of using the aforementioned binder resin, and it is believed that the cyclic characteristic of the lithium-ion secondary batteries was upgraded as a consequence.

### (Reference Examples according to Third Means)

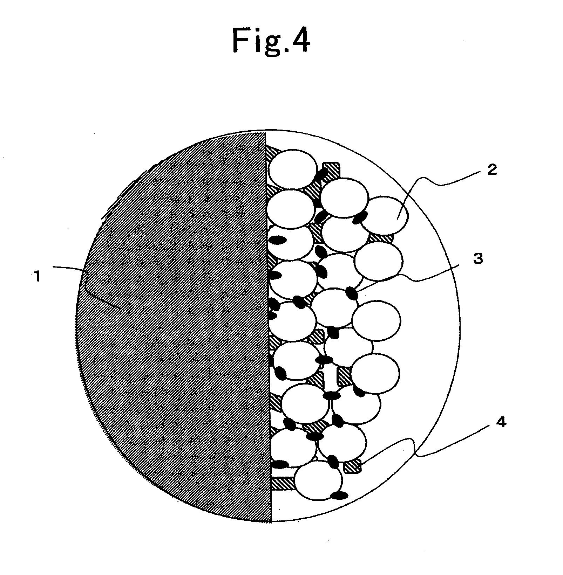

Hereinafter, the thirdmeans according to the present description will be explained in more detail while giving examples. A partial schematic explanatory diagram of an electrode for lithium-ion secondary battery that is used in the third means according to the present description is illustrated in Fig. 4. An example of the electrode for lithium-ion secondary battery according to this third means is one in which active materials 2, and conductive additives 3 are bound on a surface of collector 1 via binder resins 4.

Thebinder resins 4 are dispersed between the dispersed active materials 2, the dispersed conductive additives 3 and the collector 1, and join the active materials 2, the conductive additives 3 and the electricity connector 1 one another to put them together. Since Fig. 4 is a schematic drawing, the drawn configurations are not correct ones. Although the binder resins 4 are depicted as a powdery configuration in Fig. 4, they have indeterminate forms. Moreover, as shown in Fig. 4, the entire surface of the collector 1 is not covered with the binder resins 4, the active materials 2 and/or the conductive additives 3 completely, but minute pores exist between the respective substances and the surface of the collector 1 here and there.

An electrode for lithium-ion secondary battery that was used in the third means according to the presentdescription, and another electrode for lithium-ion secondary battery that made a comparative example were made as follows, and then a discharging cyclic test was carried out using a model battery for evaluation. The test was carried out while adapting the negative electrodes of the lithium-ion secondary batteries into an electrode to be evaluated, respectively, and then making them into a coin-shaped lithium-ion secondary battery, respectively.

### (Making of Electrodes for Evaluation)

As the active material, a powder of Si was used. As the Si powder, Si particles (produced by KOJUNDO CHEMICAL LABORATORY Co., Ltd.) with 4-um-or-less particle diameters were made use of as they were.

10 parts by weight of a paste in which a binder resin was dissolved in N-methylpyrrolidone (or NMP), and 5 parts by weight of KETJENBLACK (or KB) were added to 85 parts by weight of the Si powder, and were then mixed to prepare a slurry.

For the binder resin, those being specified in Table 4 were used. In Electrode No. 9, an alkoxy group-containing silane-modified polyamide-imide resin was used, alkoxy group-containing silane-modified polyamide-imide resin which was produced by ARAKAWA CHEMICAL INDUSTRIES, LTD.; whose product name was COMPOCERAN; whose product number was H901-2; whose solvent composition was NMP/xylene (or Xyl) ; which had cured residuals in an amount of 30%; which exhibited a viscosity of 8,000 mPa· s; and which had silica in an amount of 2 wt. % in the cured residuals (note herein that the "cured residuals" means solid contents after removing the volatile components by curing the resinous components). The alkoxy group-containing silane-modified polyamide-imide resin that was used in Electrode No. 9 was one of aforementioned COMPOCERAN (product name) H900-series products, and had a structure that is specified in above (Chemical Formula 7).

In Electrode No. 10, an alkoxy group-containing silane-modified polyamic acid resin was used, alkoxy group-containing silane-modified polyamic acid resin which was produced by ARAKAWA CHEMICAL INDUSTRIES, LTD.; whose product name was COMPOCERAN; whose product number was H850D; whose solvent composition was N,N-dimethylacetamide (or DMAc); which had cured residuals in an amount of 15%; which exhibited a viscosity of 5, 000 mPa· s; and which had silica in an amount of 2 wt. % in the cured residuals. The alkoxy group-containing silane-modified polyamic acid resin that was used in Electrode No. 10 was one of aforementioned COMPOCERAN (product name) H800-series products, and had a structure that is specified in above (Chemical Formula 6).

In Electrode No. 11, PVdF (produced by KUREHA) was used. In Electrode No. 12, a polyamide-imide resin (produced by ARAKAWA CHEMICAL INDUSTRIES, LTD.) was used. After preparing the aforementioned slurries, the slurries were put on an electrolytic copper foil with 20-µm thickness, and were then formed as a film on the copper foil, respectively, using a doctor blade.

After drying the thus obtained sheets at 80 °C for 20 minutes and then removing NMP by evaporation, a collector, which comprised the electrolytic copper foil, and negative-electrode layers, which comprised the aforementioned complex powders, were joined together firmly by means of adhesion with a roller pressing machine. These were punched out with a 1-cm² circular punch, and were then adapted into an electrode with 100-µm-or-less thickness by vacuum drying them as follows, respectively: at 200 °C for 3 hours in Electrode No.9 and Electrode No. 10; at 140 °C for 3 hours in Electrode No. 11; and at 200 °C for 3 hours in Electrode No. 12.

**(TABLE 4)**

| | Binder Resin |
|---|---|
| Electrode No. 9 | Alkoxy Group-containing Silane-modified Polyamide-imide Resin |
| Electrode No. 10 | Alkoxy Group-containing Silane-modified Polyamic Acid Resin |
| Electrode No. 11 | PVdF (Polyvinylidene Fluoride) |
| Electrode No. 12 | Polyamide-imideResin |

### (Making of Coin-shaped Batteries)

Coin-shaped model batteries (type "CR2032") were made within a dry room while adapting the aforementioned electrodes into the electrode to be evaluated, adapting metallic lithium into the counter electrode, and adapting a solution, namely, 1-mol LiPF₆/ethylene carbonate (or EC) + diethyl carbonate (or DEC) where EC:DEC = 1:1 (by volume ratio), into the electrolyte. The coin-shaped model batteries were made by overlapping a spacer, an Li foil with 500-µm thickness making a counter electrode, a separator ("Celgard #2400" (trademark name) produced by CELGARD, LLC), and the evaluation electrodes in this order, and then subjecting them to a crimping process.

### (Evaluation for Coin-shaped Batteries)

An evaluation of each of the electrodes to be evaluated in these model batteries were carried out by the following method. First of all, the model batteries were discharged at a constant electric current of 0.2 mA until reaching 0 V, and were then charged at a constant electric current of 0. 2 mA until reaching 2.0 V after having a 5-minute intermission. These were considered 1 cycle, and the charging/discharging was carried out repeatedly to examine their charge capacities.

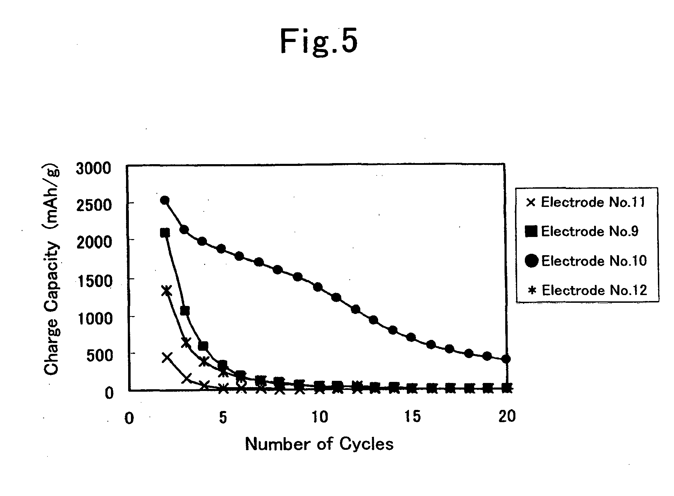

Fig. 5 illustrates a graph that shows the number of the cycles and the charge capacities which are relevant to the model batteries that used the respective electrodes. It is apparent from Fig. 5 that the decrease magnitudes of the initial charge capacity were small in the batteries in which Electrode No. 9 and Electrode No. 10 were adapted into the evaluation electrode, compared with those of the batteries in which Electrode No. 11 and Electrode No. 12 were adapted into the evaluation electrode.

As specified by Electrode No. 11, in the electrode that used PVdF, namely, a conventional binder resin, the charge capacity dropped sharply to almost 10% approximately after being subjected to the cyclic test once, whereas the charge capacities were maintained as much as from 60% to 70% approximately in Electrode No. 9 and Electrode No. 10. Besides, it is understood that the after-20-cycle charge capacities of Electrode No. 11 and Electrode No. 12 were 0, whereas the afer-20-cycle charge capacity was also maintained as much as 10% or more in Electrode No. 10.

In view of above, a cyclic test was carried out using Electrode No. 10 and Electrode No. 11 while limiting the discharge magnitudes. Although it was an evaluation for negative electrode, the discharge magnitudes were controlled herein because lithium was used for the opposite electrode. Therefore, controlling the discharge magnitudes means controlling the charge capacities. The number of the cycles was increased more than that of the aforementioned cyclic test in carrying out this particular cyclic test.

Note herein that one in which Electrode No. 10 was used, that is, one in which the binder resin was the alkoxy group-containing silane-modified polyamic acid resin, and whose discharge magnitude was set at 1,000 mAh/g was labeled Testing Example No. 9; another one whose discharge magnitude was set at 800 mAh/g was labeled Testing Example No. 10; and still another one which was charged fully was labeled Testing Example No. 11. Moreover, one in which Electrode No. 11 was used, that is, one in which the binder resin was PVdF, and whose discharge magnitude was set at 1,000 mAh/g was labeled Testing Example No. 12; and another one whose discharge magnitude was set at 800 mAh/g was labeled Testing Example No. 13.

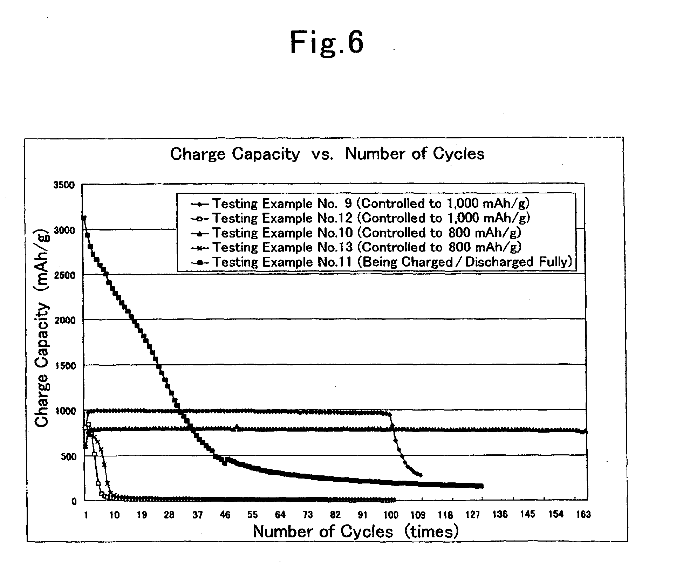

In order to set the discharge magnitude at 1, 000 mAh/g, the model batteries were discharged at a constant electric current of 0. 2 mA until reaching 1, 000 mAh/g, and were then charged at a constant electric current of 0.2 mA until reaching 1.2 V after having a 5-minute intermission. Moreover, in order to set the discharge magnitude at 800 mAh/g, the model batteries were discharged at a constant electric current of 0.2 mA until reaching 800 mAh/g, and were then charged at a constant electric current of 0.2 mA until reaching 1.2 V after having a 5-minute intermission. These were considered 1 cycle, respectively, and the charging/discharging was carried out repeatedly to examine their charge capacities. The results are illustrated in Fig. 6.

As Testing Example No. 11 in Fig. 6 shows, the initial charge capacity had been large; however the charge capacity had come to decline as the number of the cycles increased; when the model battery was charge fully using Electrode No. 10. Nevertheless, the charge capacity stopped declining at around the time when the number of the cycles exceeded 50 times, and then it was possible to maintain the charge capacity to and around a charge capacity of 250 mAh/g without any substantial changes even when the number of the cycles exceeded 120 times.

As can be seen from Testing Example No. 9 and Testing Example No. 10, limiting the discharge magnitude to 1, 000 mAh/g or 800 mAh/g resulted in maintaining the initial charge capacities even when the number of the cycles exceeded 100 times. In particular, as can be observed from Testing Example No. 10, it was possible for one in which the discharge magnitude was limited to 800 mAh/g to retain the initial charge capacity even when the number of the cycles exceeded 160 times.

On this occasion, as can be seen from Fig. 6, it was not possible for Testing Example No. 12 and Testing Example No. 13 in which PVdF was used for the binder resin to maintain the initial charge capacities even when the discharge magnitudes were limited.

### (Reference Examples according to Fourth Means)

Hereinafter, the fourth means according to the present description will be explained in more detail while giving examples.

### (Aluminum Nonwoven Fabric)

Those which were made by cutting aluminum fibers that were produced by FURUKAWA-SKY ALUMINUM CORP. and whose fibrous diameter was 100 µm approximately to a length of dozens of centimeters were superimposed on each other so as to make an weight per unit area of 500 g/m² and a porosity of 70% approximately, thereby making an aluminum nonwoven fabric with a thickness of 2 mm.

As set forthhereinbelow, positive electrodes for lithium-ion secondary battery were made by adapting the aforementioned aluminum nonwoven fabric into the collector and then filling up the following active materials in it in the respective contents.

### (Making of Electrodes for Evaluation)

### (Testing Example No. 14)

LiCoO₂, which served as a positive-electrode active material, which was produced by NIPPON CHEMICAL INDUSTRIAL Co., Ltd. and whose product name was "CELL SEED"; KETJENBLACK (or KB), which served as a conductive additive; and polyvinylidene fluoride (or PVdF), which served as a binder resin; were mixed so as to make a mixing ratio, namely, the active material: the conductive additive: the binder = 90:5:5, thereby turning them into a slurry.

The aforementioned aluminum nonwoven fabric was impregnated with 60 mg of the resulting slurry. The aluminum nonwoven fabric in which that active material was filled up was pressed to a thickness of 300 µm with a pressure of 20 MPa, and was then punched out to φ 11, thereby making a positive electrode for lithium-ion secondary battery. This one was labeled a positive electrode according to Testing Example No. 14.

### (Testing Example No. 15)

An olivine-type LiFePO₄, which served as a positive-electrode active material; KETJENBLACK (or KB), which served as a conductive additive; and polyvinylidene fluoride (or PVdF), which served as a binder resin; were mixed so as to make a mixing ratio, namely, the active material: the conductive additive: the binder = 85: 5: 10, and then N-methyl-2-pyrrolidone was added to the resultant mixture, thereby turning them into a slurry.

The aforementioned aluminum nonwoven fabric was impregnated with 17 mg of the resulting slurry. The aluminum nonwoven fabric in which that active material was filled up was pressed to a thickness of 300 µm with a pressure of 20 MPa, and was then punched out to φ 11, thereby making a positive electrode for lithium-ion secondary battery. This one was labeled a positive electrode according to Testing Example No. 15.

### (Testing Example No. 16)

An olivine-type LiFePO₄, which served as a positive-electrode active material; KETJENBLACK (or KB), which served as a conductive additive; and polyvinylidene fluoride (or PVdF), which served as a binder resin; were mixed so as to make a mixing ratio, namely, the active material: the conductive additive: the binder = 85:5:10, and then N-methyl-2-pyrrolidone was added to the resultant mixture, thereby turning them into a slurry.

The aforementioned aluminum nonwoven fabric was impregnated with 30 mg of the resulting slurry. The aluminum nonwoven fabric in which that active material was filled up was pressed to a thickness of 300 µm with a pressure of 20 MPa, and was then punched out to φ11, thereby making a positive electrode for lithium-ion secondary battery. This one was labeled a positive electrode according to Testing Example No. 16.

### (Testing Example No. 17)

The slurry into which the positive-electrode active material used in Testing Example No. 14 was put in was applied onto an etched aluminum foil with a thickness of 15 µm by a 300-µm applicator. The one which was made as follows was labeled a positive electrode according to Testing Example No. 17 : the aluminum foil with the slurry applied was dry rolled; was punched out to φ11; and was then dried at 140 °C. Moreover, the content of the slurry, which was applied on that aluminum foil, was a limit quantity that can be applied onto the aluminum foil, because the slurry had come off at the time of drying and at the time of rolling even when it was coated any more than the above thickness.

### (Testing Example No. 18)

The slurry into which the positive-electrode active material used in Testing Example No. 15 was put in was applied onto an etched aluminum foil with a thickness of 15 µm by a 300-µm applicator. The one which was made as follows was labeled a positive electrode according to Testing Example No. 18: the aluminum foil with the slurry applied was dry rolled; was punched out to φ11; and was then dried at 140 °C.

### (Testing Example No. 19)

The slurry into which the positive-electrode active material used in Testing Example No. 16 was put in was applied onto an etched aluminum foil with a thickness of 15 µm by a 300-µm applicator. The one which was made as follows was labeled a positive electrode according to Testing Example No. 19: the aluminum foil with the slurry applied was dry rolled; was punched out to φ11; and was then dried at 140 °C. Moreover, the content of the slurry, which was applied on that aluminum foil, was a limit quantity that can be applied onto the aluminum foil, because the slurry had come off at the time of drying and at the time of rolling even when it was coated any more than the above thickness.

Each of the following tests was carried out using a model battery for evaluation, model battery in which aforementioned Testing Example No. 14 through Testing Example No. 19 were adapted into the positive electrode for lithium-ion secondary battery. In the respective tests, a coin-shaped lithium-ion secondary battery was used, coin-shaped lithium-ion secondary battery in which the positive electrode was adapted into an electrode to be evaluated.

Table 5 gives the types of collectors in the respective electrodes to be evaluated, the types and quantities of positive-electrode active materials therein, and the battery capacities of the positive electrodes as positive electrode per se.

**(TABLE 5)**

| | Collector | Active Material | Amount of Active Material (mg/ φ11) | Battery Capacity of Positive Electrode (mAh/ φ 11) |
|---|---|---|---|---|
| Testing Ex. No. 14 | Aluminum Nonwoven Fabric | LiCoO₂ | About 60 | About 10 |
| Testing Ex. No. 15 | Aluminum Nonwoven Fabric | Olivine-type LiFePO₄ | About 17 | 2.5 |
| Testing Ex. No. 16 | Aluminum Nonwoven Fabric | Olivine-type LiFePO₄ | About 30 | 4.5 |
| Testing Ex. No. 17 | Aluminum Foil | LiCoO₂ | About 20 | About 3 |
| Testing Ex. No. 18 | Aluminum Foil | Olivine-type LiFePO₄ | About 16 | 2.4 |
| Testing Ex. No. 19 | Aluminum Foil | Olivine-type LiFePO₄ | About 20 | About 3 |

### (Making of Coin-shaped Batteries)

Coin-shaped model batteries (type "CR2032") were made within a dry room while adapting the aforementioned electrodes into the positive electrode, and adapting a solution, namely, 1-mol LiPF₆/ethylene carbonate (or EC) + diethyl carbonate (or DEC) where EC:DEC=1:1 (by volume ratio), into the electrolyte. The coin-shaped model batteries were made by overlapping a spacer, an Li foil with 500-µm thickness making a counter electrode, a separator ("Celgard #2400" (trademark name) produced by CELGARD, LLC), and the evaluation electrodes in this order, and then subjecting them to a crimping process.

### (Evaluation for Coin-shaped Batteries)

An evaluation of each of the electrodes to be evaluated in these model batteries were carried out by the following method.

(Calculation of Battery Capacities of Positive Electrodes) A battery capacity of the positive electrode according to each of the testing examples was computed from the weight of each of the active materials by calculation.

### (Charging/Discharging Cyclic Test)

A charging/discharging cyclic test was carried out using a model battery in which the positive electrode according to Testing Example No. 14 was used and using another model battery in which the positive electrode according to Testing Example No. 17 was used. In Testing Example No. 14, first of all, the charging/discharging was repeated 5 times at a constant electric current of 0.2C (i.e., an electric-current value at which the charging/discharging capacity was discharged at that electric current in 5 hours); and then the charging/discharging was repeated 5 times again at a constant electric current of 0.2C (i.e., an electric-current value at which the charging/discharging capacity was discharged again at that electric current in 5 house) after carrying out the charging/discharging repeatedly as follows: 5 times at a constant electric current of 0.4C (i.e., an electric-current value at which the charging/discharging capacity was discharged at that electric current in 2.5 hours; 5 times at a constant electric current of 0. 8C (i.e., an electric-current value at which the charging/discharging capacity was discharged at that electric current in 1.25 hours); 5 times at a constant electric current of 1.0C (i.e., an electric-current value at which the charging/discharging capacity was discharged at that electric current in 1 hour); 5 times at a constant electric current of 2.0C (i.e., an electric-current value at which the charging/discharging capacity was discharged at that electric current in 0.5 hours) ; 5 times at a constant electric current of 3.0C (i.e., an electric-current value at which the charging/discharging capacity was discharged at that electric current in 1/3 hours); and 5 times at a constant electric current of 5.0C (i.e., an electric-current value at which the charging/discharging capacity was discharged at that electric current in 1/5 hours) ; and eventually the initial discharge capacity after the repetitive charge/discharge operations that were carried out initially at a constant electric current of 0.2C was compared with the final discharge capacity in the cyclic test that was carried out finally at a constant electric current of 0.2C.

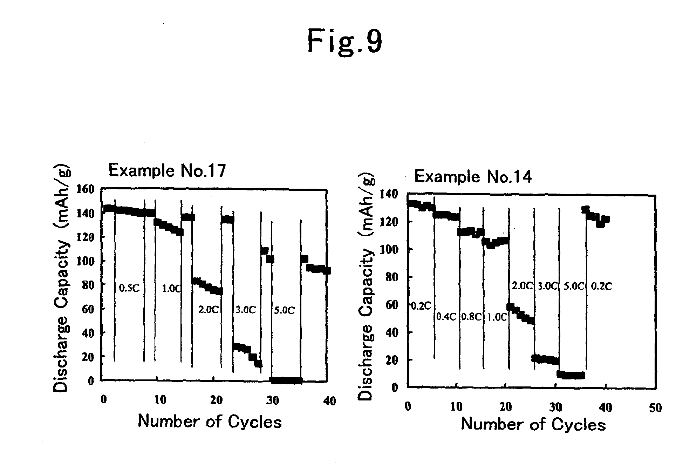

Moreover, regarding Testing Example No. 17 as well, a similar cyclic test was carried out, though the rate differed. To be concrete, first of all, the charging/discharging was repeated 2 times at a constant electric current of 0.2C; and then the charging/discharging was repeated 5 times again at a constant electric current of 0.2C after carrying out the charging/discharging repeatedly as follows: 5 times at a constant electric current of 0.5C; 2 times at a constant electric current of 0.2C; 5 times at a constant electric current of 1.0C; 2 times at a constant electric current of 0.2C; 5 times at a constant electric current of 2.0C; 2 times at a constant electric current of 0.2C; 5 times at a constant electric current of 3.0C; 2 times at a constant electric current of 0.2C; and 5 times at a constant electric current of 5.0C; and eventually the initial discharge capacity after the repetitive charge/discharge operations that were carried out initially at a constant electric current of 0.2C was compared with the final discharge capacity in the cyclic test that was carried out finally at a constant electric current of 0.2C. In the case of Testing Example No. 17, the charging/discharging at a constant electric current of 0.2C was inserted repeatedly between the respective constant-electric-current conditions in order to make sure at what point the initial discharge capacity was not retrievable. The results are illustrated in Fig. 9.

In the case of Testing Example No. 14 that is shown in the right diagram in Fig. 9, the initial discharge capacity at a constant electric current of 0.2C was about 130 mAh/g, and that discharge capacity dropped as the constant electric current rose; however, the discharge capacity remained as much as about 10 mAh/g even at an electric current of 5.0C; thereafter it become about 130 mAh/g finally when the constant electric current was 0.2C so that the initial discharge capacity at a constant electric current of 0.2C was recovered virtually. In the case of Testing Example No. 17 that is shown in the left diagram in Fig. 9, the discharge capacity, which hadbeen 140 mAh/g initially, fell down to 100 mAh/g after the discharge capacity being exhibited at a constant electric current of 0.2C following the cyclic test that had been carried out at a constant electric current of 3.0C so that it had come be unrecoverable up to the initial discharge capacity. Moreover, the discharge capacity had become 0 mAh/g virtually at a constant electric current of 5.0C, and then the final discharge capacity was recovered only up to 100 mAh/g at a constant electric current of 0.2C eventually.

Moreover, as can be understood from Table 5 above, it was a limit to make the positive electrode according to Testing Example No. 17 in which the aluminum foil was used for the collector exhibit a capacity of about 3 mAh when it had φ11; whereas it was possible for the positive electrode according to Testing Example No. 14 in which the aluminum nonwoven fabric was used for the collector to exhibit a capacity of about 10 mAh because the active material could be filled up therein highly densely.

Consequently, as can be seen from Table 5 and Fig. 9, it was understood that, in the model battery that used the possible electrode according to Testing Example No. 14 in which the active material was filled up highly densely, the discharge capacity recovered more in the cyclic test than that of the model battery that used the positive electrode according to Testing Example No. 17. That is, in the model battery that used the positive electrode according to Testing Example No. 14, the final discharge capacity at the time of flowing the 0.2C constant electric current eventually did not vary from the initial discharge capacity at the time of flowing the 0.2C constant electric current at first, and so the cyclic characteristic was good. From these results, it was understood that the active material was utilized efficiently in Testing Example No. 14 as well in which it was filled up highly densely.

### (Rate Test No. 1)

Using a model battery in which Testing Example No. 15 was adapted into the positive electrode and another model battery in which Testing Example No. 18 was adapted into the positive electrode, a rate test was carried out. As described above, Testing Example No. 15, and Testing Example No. 18 used a low electrically-conductive active material for the active material. As set forth in Table 5, too, note herein that Testing Example No. 15 and Testing Example No. 18 exhibited a battery capacity of positive electrode that is equal to each other, about 2.5 mAh/φ11.

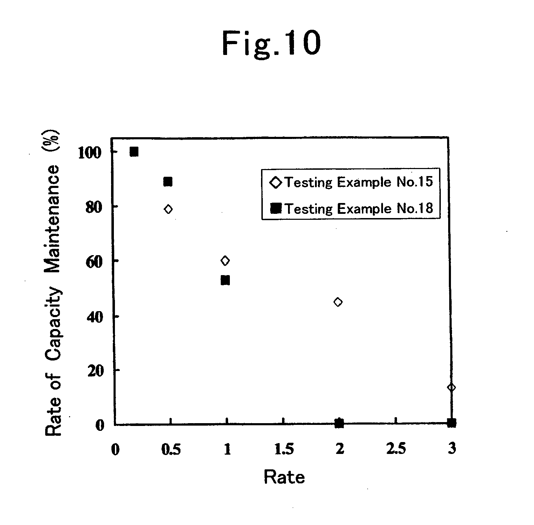

The respective model batteries were used to subject them to the following charging/discharging operation: they were charged up to "4.0 V vs. Li/Li⁺" at a constant electric current of 0.1C: thereafter they were measured for discharge capacities when they were discharged down to "3.0 V vs. Li/Li⁺" while setting the discharge rate as follows 0.2C, 0.5C, 1.0C, 2.0C and 3.0C, respectively; and then those results are illustrated in Fig. 10. Fig. 10 shows the rates of capacity maintenance at the respective rates when the discharge capacity at a constant electric current of 0.2C was taken as 100%.

As shown in Table 5, the model battery that used the positive electrode according to Testing Example No. 15 had a battery capacity of positive electrode that was equal to that of the model battery that used the positive electrode according to Testing Example No. 18. However, as illustrated in Fig. 10, it was understood that the model battery that used the positive electrode according to Testing Example No. 15 exhibited high rates of capacity maintenance at higher rates, namely, when the rate was one or more, compared with those of the model battery that used the positive electrode according to Testing Example No. 18.

As the rate became higher, the discharge capacity of the model battery that used the positive electrode according to Testing Example No. 15 reduced in the same manner as the model battery that used the positive electrode according to Testing Example No. 18 did, and so the rate of capacity maintenance lowered. However, since the active material of Testing Example No. 15 and Testing Example No. 18 was a low electrically-conductive active material, the discharge capacity lowered sharply in the model battery that used the positive electrode in which the aluminum foil was adapted into the collector when the rate was higher, that is, cases that correspond to charging in short periods of time, and then the rate of capacity maintenance became 0% when the rate was two or more. On the contrary, in the model battery that used the positive electrode according to Testing Example No. 15 which used the aluminum nonwoven fabric for the collector, the rate of capacity maintenance was available as much as 45% approximately when the rate was two, and the capacity was maintained as much as 15% even when the rate was three.

The following were understood from above: it is possible to utilize an active material efficiently even when the used active material is a low electrically-conductive active material in case of using the aluminum nonwoven fabric for a collector; and a rate of capacity maintenance can be higher even when the rate is higher.

### (Rate Test No. 2)

Using a model battery in which Testing Example No. 16 was adapted into the positive electrode and another model battery in which Testing Example No. 19 was adapted into the positive electrode, a rate test was carried out. As described above, Testing Example No. 16, and Testing Example No. 19 used a low electrically-conductive active material for the active material. As set forth in Table 5, Testing Example No. 16 exhibited a battery capacity of positive electrode of about 4.5 mAh/φ11, and Testing Example No 19 exhibited a battery capacity of positive electrode of about 3 mAh/φ11. In the positive electrode according to Testing Example No. 19, the slurry that included the positive-electrode active material was applied onto the aluminum foil in such a limit amount that it had come off even when it was coated any more than the above thickness.

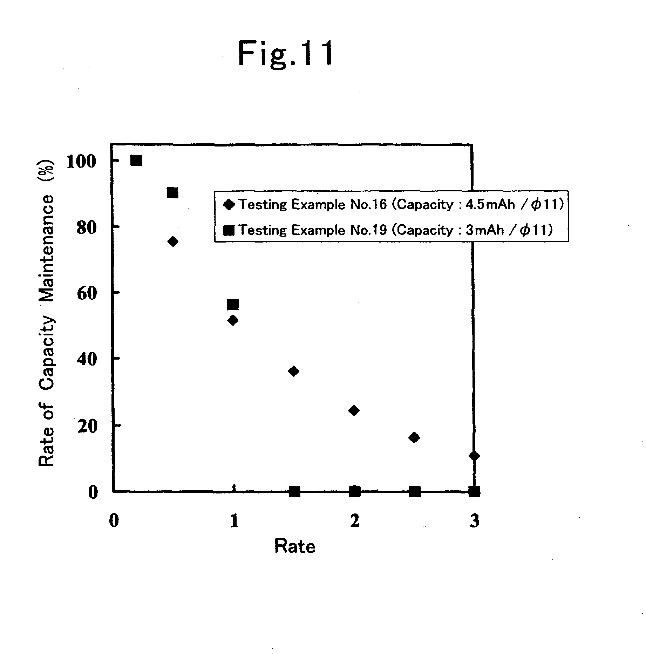

The respective model batteries were used to subject them to the following charging/discharging operation: they were charged up to "4.0 V vs. Li/Li⁺" at a constant electric current of 0.1C; thereafter they were measured for discharge capacities when they were discharged down to "3.0 V vs. Li/Li⁺" while setting the discharge rate as follows 0.2C, 0.5C, 1.0C, 2.0C and 3.0C, respectively; and then those results are illustrated in Fig. 11. Fig. 11 shows the rates of capacity maintenance at the respective rates when the discharge capacity at a constant electric current of 0.2C was taken as 100%.

As shown in Table 5, in the positive electrode according to Testing Example No. 16, it was possible to apply the low electrically-conductive positive-electrode active material in a higher density than in the positive electrode according to Example No. 19. And, as illustrated in Fig. 11, it was understood that the model battery that used the positive electrode according to Testing Example No. 16 exhibited high rates of capacity maintenance at higher rates, namely, when the rate was one or more, compared with those of the model battery that used the positive electrode according to Testing Example No. 19.

As the rate became higher, the discharge capacity of the model battery that used the positive electrode according to Testing Example No. 16 reduced in the same manner as the model battery that used the positive electrode according to Testing Example No. 19 did, and so the rate of capacity maintenance lowered. However, since the active material of Testing Example No. 16 and Testing Example No. 19 was a low electrically-conductive active material, the discharge capacity lowered sharply in the model battery that used the positive electrode in which the aluminum foil was adapted into the collector when the rate was higher, that is, cases that correspond to charging in short periods of time, and then the rate of capacity maintenance became 0% when the rate was 1. 5 or more. On the contrary, in the model battery that used the positive electrode according to Testing Example No. 16 which used the aluminum nonwoven fabric for the collector, the rate of capacity maintenance was available as much as 35% approximately when the rate was 1.5, and the capacity was maintained as much as about 10% approximately even when the rate was three.

The following were understood from above: it is possible to utilize an active material efficiently even when a low electrically-conductive active material is filled up highly densely to use in case of using the aluminum nonwoven fabric for a collector; and a rate of capacity maintenance can be higher even when the rate is higher.

Moreover, in the respective tests, the model batteries with the button-battery form were used herein; however, regarding cylinder-type batteries, since it is anticipated that the resistances of battery per se decrease compared with those of button-type batteries, much better results can be expected. Moreover, it could be ascertained that the respective electrodes with a thickness of 300 µm that were used for Testing Example No. 14 through Testing Example No. 16 were not associated with any troubles in winding them into cylindrical shapes.

## Claims

1. A negative electrode for a lithium-ion secondary battery being manufactured via an application step of applying a binder resin and an active material onto a surface of collector, and a curing step of curing the binder resin, and wherein said active material includes a lithium-inactive metal that does not form any intermetallic compounds with lithium, or a silicide of the lithium-inactive metal, and an elemental substance of Si,
the negative electrode for lithium-ion secondary battery being **characterized in that**:
said binder resin is an alkoxysilyl group-containing resin, the structure of the alkoxysilyl group being specified by formula (I);
(Chemical Formula 1) 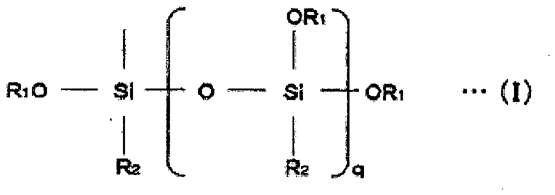
wherein "R₁" is an alkyl group whose number of carbon atoms is from 1 to 8;
"R₂" is an alkyl group or alkoxyl group whose number of carbon atoms is from 1 to 8; and
"q" is an integer of from 1 to 100.

2. A manufacturing process for a negative electrode for a lithium-ion secondary battery, the manufacturing process comprising:
an application step of applying a binder resin and an active material onto a surface of collector; and
a curing step of curing said binder resin and then binding said active material on said collector surface,
the manufacturing process for a negative electrode for a lithium-ion secondary battery being **characterized in that**:
said binder resin is an alkoxysilyl group-containing resin, the structure of the alkoxysilyl group being specified by formula (I); and
said active material includes a lithium-inactive metal that does not form any intermetallic compounds with lithium, or a silicide of the lithium-inactive metal, and an elemental substance of Si;
(Chemical Formula 1) 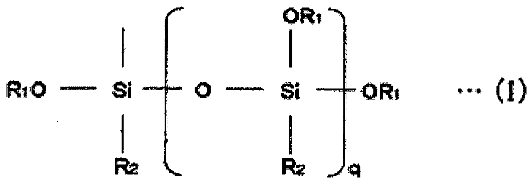
wherein "R₁" is an alkyl group whose number of carbon atoms is from 1 to 8;
"R₂" is an alkyl group or alkoxyl group whose number of carbon atoms is from 1 to 8; and
"q" is an integer of from 1 to 100.

3. The negative electrode for a lithium-ion secondary battery as set forth in claim 1 or the manufacturing process for negative electrode for a lithium-ion secondary battery as set forth in claim 2, wherein said lithium-inactive metal is at least one member that is selected from the group consisting of Ti, Zr, Ni, Cu, Fe and Mo.

## Patentansprüche

1. Negative Elektrode für eine Lithium-Ionen-Sekundärbatterie, die durch einen Aufbringungsschritt des Aufbringens eines Bindemittelharzes und eines Aktivmaterials auf eine Oberfläche eines Kollektors, und einen Härtungsschritt des Härtens des Bindemittelharzes hergestellt ist, und wobei das Aktivmaterial ein Lithium-inaktives Metall, das keine intermetallischen Verbindungen mit Lithium bildet, oder ein Silizid des Lithium-inaktiven Metalls, und eine elementare Substanz von Si beinhaltet,
wobei die negative Elektrode für eine Lithium-Ionen-Sekundärbatterie **dadurch gekennzeichnet ist, dass**:
das Bindemittelharz ein Alkoxysilylgruppe-enthaltendes Harz ist, wobei die Struktur der Alkoxysilylgruppe durch die Formel (I) dargestellt ist;
(chemische Formel 1) 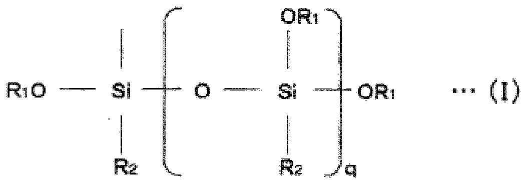
wobei "R₁" eine Alkylgruppe ist, deren Anzahl an Kohlenstoffatomen von 1 bis 8 ist;
"R₂" eine Alkylgruppe oder Alkoxylgruppe ist, deren Anzahl an Kohlenstoffatomen von 1 bis 8 ist; und
"q" eine ganze Zahl von 1 bis 100 ist.

2. Herstellungsverfahren für eine negative Elektrode für eine Lithium-Ionen-Sekundärbatterie, wobei das Herstellungsverfahren umfasst:
einen Aufbringungsschritt des Aufbringens eines Bindemittelharzes und eines Aktivmaterials auf eine Oberfläche eines Kollektors; und
einen Härtungsschritt des Härtens des Bindemittelharzes und dann Binden des Aktivmaterials auf die Kollektoroberfläche,
wobei das Herstellungsverfahren für eine negative Elektrode für eine Lithium-Ionen-Sekundärbatterie **dadurch gekennzeichnet ist, dass**:
das Bindemittelharz ein Alkoxysilylgruppe-enthaltendes Harz ist, wobei die Struktur der Alkoxysilygruppe durch die Formel (I) dargstellt ist; und
das Aktivmaterial ein Lithium-inaktives Metall, das keine intermetallischen Verbindungen mit Lithium bildet, oder ein Silizid des Lithium-inaktiven Metalls, und eine elementare Substanz von Si beinhaltet;
(chemische Formel 1) 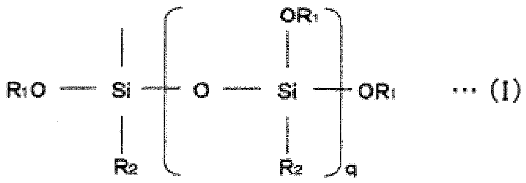
wobei "R₁" eine Alkylgruppe ist, deren Anzahl an Kohlenstoffatomen von 1 bis 8 ist;
"R₂" eine Alkylgruppe oder Alkoxylgruppe ist, deren Anzahl an Kohlenstoffatomen von 1 bis 8 ist; und
"q" eine ganze Zahl von 1 bis 100 ist.

3. Negative Elektrode für eine Lithium-Ionen-Sekundärbatterie nach Anspruch 1 oder das Herstellungsverfahren für eine negative Elektrode für eine Lithium-Ionen-Sekundärbatterie nach Anspruch 2, wobei das Lithium-inaktive Metall zumindest ein Mitglied ausgewählt aus der Gruppe bestehend aus Ti, Zr, Ni, Cu, Fe und Mo ist.

## Revendications

1. Électrode négative pour une batterie secondaire au lithium-ion étant fabriquée par l'intermédiaire d'une étape d'application pour appliquer une résine de liaison et un matériau actif sur une surface de collecteur, et d'une étape de durcissement pour durcir la résine de liaison, et dans laquelle ledit matériau actif inclut un métal inactif sur le lithium qui ne forme pas de composés intermétalliques avec le lithium, ou un siliciure du métal inactif sur le lithium, et une substance élémentaire de Si,
l'électrode négative pour batterie secondaire au lithium-ion étant **caractérisée en ce que** :
ladite résine de liaison est un résine contenant un groupe alcoxysilyle, la structure du groupe alcoxysilyle étant spécifiée par la formule (I) ;
(Formule Chimique 1) 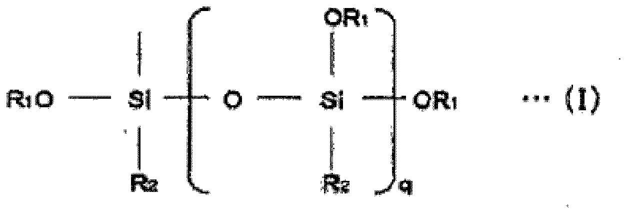
dans laquelle « R₁ » est un groupe alkyle dont le nombre d'atomes de carbone est de 1 à 8 ;
« R₂ » est un groupe alkyle ou un groupe alcoxyle dont le nombre d'atomes de carbone est de 1 à 8 ; et
« q » est un entier de 1 à 100.

2. Procédé de fabrication pour une électrode négative pour une batterie secondaire au lithium-ion, le procédé de fabrication comprenant :
une étape d'application pour appliquer une résine de liaison et un matériau actif sur une surface de collecteur ; et
une étape de durcissement pour durcir la résine de liaison et ensuite lier ledit matériau actif sur ladite surface de collecteur,
le procédé de fabrication pour une électrode négative pour une batterie secondaire au lithium-ion étant **caractérisé en ce que** :
ladite résine de liaison est un résine contenant un groupe alcoxysilyle, la structure du groupe alcoxysilyle étant spécifiée par la formule (I) ; et
ledit matériau actif inclut un métal inactif sur le lithium qui ne forme pas de composés intermétalliques avec le lithium, ou un siliciure du métal inactif sur le lithium, et une substance élémentaire de Si ;
(Formule Chimique 1) 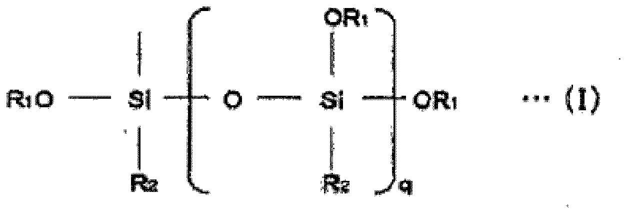
dans laquelle « R₁ » est un groupe alkyle dont le nombre d'atomes de carbone est de 1 à 8 ;
« R₂ » est un groupe alkyle ou un groupe alcoxyle dont le nombre d'atomes de carbone est de 1 à 8 ; et
« q » est un entier de 1 à 100.

3. Électrode négative pour une batterie secondaire au lithium-ion selon la revendication 1 ou procédé de fabrication pour une électrode négative pour une batterie secondaire au lithium-ion selon la revendication 2, dans laquelle/lequel ledit métal inactif sur le lithium est au moins un élément qui est choisi parmi le groupe consistant en Ti, Zr, Ni, Cu, Fe et Mo.
